# FASCICULE DE BREVET EUROPEEN

(11) **EP 3 947 104 B1**
(45) Date de publication et mention de la délivrance du brevet: **21.02.2024**
(21) Numéro de dépôt: 20713935.3
(22) Date de dépôt: 01.04.2020
(51) Int. Cl.: B62B 3/14, B62B 3/18

(54) **CHARIOT POUR SUPPORTER ET PESER UN CONTENANT**
WAGEN ZUM TRAGEN UND WIEGEN EINES CONTAINERS
TROLLEY FOR SUPPORTING AND WEIGHING A CONTAINER

(30) Priorité: 03.04.2019 FR 1903591; 17.06.2019 FR 1906492; 05.12.2019 FR 1913820
(43) Date de publication de la demande: 09.02.2022
(73) Titulaire: KNAP, 06410 Biot (FR)
(72) Inventeur: LETIERCE, Dylan, 06530 Peymeinade (FR); MALOGNE, Jonathan, 06810 Auribeau (FR); CHALOIN, Christophe, 06110 Le Cannet (FR)
(74) Mandataire: Hautier IP
(86) Numéro de dépôt international: PCT/EP2020/059311
(87) Numéro de publication internationale: WO 2020/201386

(56) Documents cités:
- EP-A2- 2 284 062
- WO-A1-90/14260
- WO-A1-2016/135142
- CN-A- 106 394 642
- DE-U1- 29 510 089
- DE-U1-202018 000 613
- US-A1- 2017 096 157

## Description

### DOMAINE TECHNIQUE

L'invention concerne le domaine des chariots de transport. Elle trouve notamment son application pour les surfaces de distribution telles que les supermarchés. Elle concerne plus précisément l'intégration de dispositifs de mesure au sein de chariots afin de peser les articles sélectionnés par l'utilisateur et placés dans le chariot.

### ÉTAT DE LA TECHNIQUE

De manière connue, les supermarchés mettent à disposition des dispositifs d'auto-encaissement dits caisses automatiques permettant aux personnes faisant leurs courses, une fois la totalité de leurs courses mises dans le chariot, de procéder au décompte de la somme à payer et au règlement de cette somme. Cela comprend une étape de scan de chaque article, par le biais d'un lecteur optique, puis une étape de pesée de chaque article sélectionné. Cette étape de pesée permet notamment de s'assurer que chaque article placé par l'utilisateur dans le chariot a bien fait l'objet d'un scan et donc a bien été comptabilisé pour son règlement.

Ces caisses automatiques telles que décrites sont souvent mises à disposition des utilisateurs pour permettre premièrement de limiter de longues et pénibles files d'attente à l'encaissement des courses et deuxièmement augmenter le nombre d'encaissements par unité de temps et par conséquent augmenter la productivité des supermarchés.

Pour supprimer totalement ces longues et pénibles files d'attente, il existe de nos jours des chariots ayant pour fonction de peser par eux même les articles sélectionnés par l'utilisateur. Cependant ces chariots ne sont souvent pas faciles d'utilisation pour l'utilisateur. En effet, il n'est pas facile de manipuler ces chariots avec aisance.

De plus, ces chariots présentent souvent des dysfonctionnements réguliers et manquent souvent de précision. Il s'ensuit que des divergences sont indiquées entre les articles placés dans le chariot et ceux comptabilisés suite à l'étape de scan. Cette situation empêche d'identifier efficacement une tentative de fraude. A contrario, cette situation est également délicate en ce qu'elle peut s'avérer inconfortable pour l'utilisateur de bonne foi.

Un autre inconvénient de ce type de chariots est qu'ils sont souvent encombrants ce qui rend difficile leur stockage.

Le document DE 20 2018 000 613 U1 décrit un chariot de transport présentant une plateforme de chargement équipée d'un capteur de poids et qui peut glisser sur une plateforme de chargement d'un autre chariot pour permettre l'emboitement de deux chariots.

Il existe donc un besoin consistant à proposer une solution pour réduire, voire pour supprimer au moins certains des inconvénients mentionnés ci-dessus.

La présente invention vise à satisfaire ce besoin.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Selon un aspect, l'invention concerne un chariot, par exemple pour supermarché, selon la revendication 1. Ainsi, le chariot comprend:
- au moins un châssis supporté par au moins trois organes d'appui configurés pour supporter de manière isostatique le chariot sur un sol, au moins deux desdits au moins trois organes comprenant chacun au moins un dispositif roulant, telle qu'une roue,
- une structure porteuse supportée par le châssis.

De préférence, le chariot comprend au moins un contenant dans lequel au moins un produit est destiné à être placé.

Le chariot comprend une structure de suspension supportée par la structure porteuse et configurée pour suspendre au moins un contenant dans lequel au moins un produit est destiné à être placé. Le chariot est configuré de sorte à ce que l'au moins un contenant soit entièrement suspendu à la structure de suspension par exemple par des zones d'accueils.

Le chariot comprend au moins un dispositif de mesure porté en partie au moins par la structure de suspension et étant destiné à mesurer au moins un paramètre relatif au poids de l'au moins un contenant lorsque le contenant est suspendu à la structure de suspension.

De manière optionnelle, mais avantageuse, la structure de suspension, avantageusement un cadre, l'au moins un contenant et le châssis dudit chariot sont conformés pour coopérer avec une structure de suspension, avantageusement un cadre, au moins un contenant et un châssis d'un autre chariot de sorte à permettre l'emboîtement au moins partiel d'une partie au moins dudit autre chariot dans une partie au moins dudit chariot par coopération de la structure de suspension, avantageusement du cadre, de l'au moins un contenant et du châssis dudit autre chariot avec la structure de suspension, avantageusement le cadre, l'au moins un contenant et le châssis dudit chariot.

De manière optionnelle, mais avantageuse, la structure de suspension, avantageusement le cadre, l'au moins un contenant et le châssis dudit chariot sont conformés pour coopérer avec la structure de suspension, avantageusement le cadre, l'au moins un contenant et le châssis d'un autre chariot de sorte à permettre l'emboîtement au moins partiel d'une partie au moins dudit chariot dans une partie au moins dudit autre chariot par coopération de la structure de suspension, avantageusement du cadre, de l'au moins un contenant et du châssis dudit chariot avec la structure de suspension, avantageusement le cadre, l'au moins un contenant et le châssis dudit autre chariot.

Ainsi, à la fois une partie d'un premier chariot pénètre dans un deuxième chariot et à la fois une autre partie du deuxième chariot pénètre dans le premier chariot.

La structure de suspension dudit chariot est conformée pour coopérer avec la structure de suspension d'un autre chariot de sorte à permettre l'emboîtement au moins partiel dudit chariot dans ledit autre chariot par coopération de la structure de suspension dudit chariot avec la structure de suspension dudit autre chariot.

Selon un mode de réalisation, de préférence, la structure de suspension dudit chariot est conformée pour coopérer avec la structure de suspension d'un autre chariot de sorte à permettre l'emboîtement au moins partiel de la structure porteuse dudit chariot dans une structure porteuse de dudit autre chariot.

Ainsi la présente invention propose à l'utilisateur un chariot permettant de peser l'au moins un contenant et l'au moins un produit qu'il souhaite acheter tout en lui permettant de stocker facilement et de manière non encombrante le chariot. Ces deux fonctions sont notamment rendus possibles par le biais de la présence de la structure de suspension.

De plus, la présente invention permet à la fois aux supermarchés de lutter contre la fraude existante par les systèmes connus de l'auto encaissement et à la fois d'obtenir un gain de place considérable pour le stockage du chariot lors de son non-utilisation.

La présente invention permet d'intégrer très peu de parties mécaniques, mobiles ou mouvantes. Cela permet d'augmenter la robustesse et la fiabilité de la présente invention.

En effet, les chariots sont régulièrement malmenés par les utilisateurs, il est donc d'un grand avantage de disposer de chariots robustes. La présente invention en plus des innovations multiples de conception et d'usage qu'elle apporte, permet d'avoir un chariot robuste.

La présente invention présente également des caractéristiques physiques (taille, contenant, ...) optimisées. Ces caractéristiques permettent d'ailleurs d'intégrer des contenants sous la forme de sacs ou non.

Selon un autre aspect, l'invention concerne un ensemble comprenant un chariot selon l'invention et au moins un contenant, de préférence une pluralité de contenants, chaque contenant configuré pour coopérer avec la structure de suspension de sorte à ce que le contenant soit entièrement suspendu par la structure de suspension.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente une première vue extérieure du chariot selon un premier mode de réalisation de la présente invention.
La figure 2 représente une deuxième vue extérieure du chariot de la figure 1.
La figure 3 représente une vue de l'avant du chariot de la figure 1.
La figure 4 représente une vue de l'arrière du chariot de la figure 1.
La figure 5 représente une vue de côté du chariot de la figure 1.
La figure 6 représente une vue en coupe dans la longueur du chariot de la figure 1.
La figure 7 représente une vue extérieure du bac suspendu du chariot de la figure 1.
La figure 8 représente une vue extérieure du chariot de la figure 1 lors de son utilisation.
La figure 9 représente une vue en coupe du chariot de la figure 1 lors de son utilisation.
La figure 10 représente une vue extérieure de la barre de suspension du chariot de la figure 1.
La figure 11 représente une vue en coupe de la barre de suspension du chariot de la figure 1.
La figure 12 représente une vue de côté du chariot selon un premier mode de réalisation.
La figure 13 représente une vue de côté du chariot selon un premier mode de réalisation.
La figure 14 représente une vue extérieure du chariot selon un premier mode de réalisation.
La figure 15 représente une vue de côté de l'emboîtement de deux chariots selon un premier mode de réalisation.
La figure 16 représente une vue extérieure de l'emboîtement des deux chariots selon un deuxième mode de réalisation.
La figure 17 représente une vue de côté de l'emboîtement de trois chariots selon un premier mode de réalisation.
La figure 18 représente une vue extérieure de l'emboîtement de trois chariots selon un premier mode de réalisation.
La figure 19 représente une vue extérieure du premier et deuxième bras du chariot selon un deuxième mode de réalisation.
La figure 20 représente une vue de côté de l'emboîtement des premiers bras de deux chariots selon un deuxième mode de réalisation.
La figure 21 représente une vue extérieure de l'emboîtement des bras de deux chariots selon un deuxième mode de réalisation.
La figure 22 représente une vue extérieure du réceptacle du chariot selon un troisième mode de réalisation.
La figure 23 représente une vue extérieure de l'emboîtement des deux réceptacles de deux chariots selon un troisième mode de réalisation.
La figure 24 représente une vue du dessus de l'emboîtement des deux réceptacles de deux chariots selon un troisième mode de réalisation.
La figure 25 représente une vue extérieure du premier bras et du deuxième bras du chariot selon un quatrième mode de réalisation.
La figure 26 représente une vue de dessus des premiers bras et deuxièmes bras de deux chariots lors de leur emboîtement selon un quatrième mode de réalisation.
La figure 27 représente une vue extérieure des premiers bras et deuxièmes bras de deux chariots lors de leur emboîtement selon un quatrième mode de réalisation.
La figure 28 représente une vue extérieure du châssis du chariot selon un cinquième mode de réalisation.
La figure 29 représente une vue de dessus de l'emboîtement de châssis de deux chariots selon un cinquième mode de réalisation.
La figure 30 représente une vue extérieure de l'emboîtement de deux châssis de deux chariots selon un cinquième mode de réalisation.
La figure 31 représente une vue extérieure du chariot avec le cadre selon le troisième mode de réalisation.
La figure 32 représente une vue en coupe du chariot avec le cadre selon le deuxième mode de réalisation.
La figure 33 représente une vue en perspective d'un autre mode de réalisation dans lequel la structure de suspension est montée en rotation sur le chariot. Sur cette figure le chariot est en configuration de portage.
La figure 34 représente une vue en coupe d'une pluralité de chariots selon le mode de réalisation illustré en figure 33, les chariots étant en configuration de stockage et étant emboîtés les uns dans les autres.
La figure 35 représente une vue en perspective d'un autre mode de réalisation.
La figure 36 représente une vue de profil d'une pluralité de chariots selon le mode de réalisation illustré en figure 35, les chariots étant en configuration de stockage et étant emboîtés les uns dans les autres.
La figure 37 représente une vue en perspective d'une pluralité de chariots selon le mode de réalisation illustré en figure 35, les chariots étant en configuration de stockage et étant emboîtés les uns dans les autres.
La figure 38 représente une vue en perspective du dispositif de mesure selon le mode de réalisation illustré en figure 35.
La figure 39 représente une vue en perspective du chariot de la présente invention selon un sixième mode de réalisation. Sur cette figure les contenants sont en configuration de déploiement.
La figure 40 représente une vue de côté du chariot selon le mode de réalisation illustré en figure 39.
La figure 41 représente une autre vue en perspective du chariot selon le mode de réalisation illustré en figure 39.
La figure 42 représente une vue de devant du chariot selon le mode de réalisation illustré en figure 39.
La figure 43 représente une vue en perspective du chariot avec la butée avant selon le mode de réalisation illustré en figure 39.
La figure 44 représente une vue de côté selon le sixième mode de réalisation. Sur cette figure les contenants sont en configuration de compression.
La figure 45 représente une vue de côté du chariot selon le mode de réalisation illustré en figure 44.
La figure 46 représente une autre vue en perspective du chariot selon le mode de réalisation illustré en figure 44.
La figure 47 représente une vue de devant du chariot selon le mode de réalisation illustré en figure 44.
La figure 48 représente une vue en coupe du chariot selon le mode de réalisation illustré en figure 39.
La figure 49 représente une vue en perspective du chariot selon le mode de réalisation illustré en figure 39.
La figure 50 représente une autre vue en coupe du chariot selon le mode de réalisation illustré en figure 39.
La figure 51 représente une vue en perspective d'une pluralité de chariots selon le mode de réalisation illustré en figure 41, les chariots étant en configuration de stockage et étant emboîtés les uns dans les autres, les contenants étant en configuration de compression.
La figure 52 représente une autre vue en perspective d'une pluralité de chariots selon le mode de réalisation illustré en figure 41, les chariots étant en configuration de stockage et étant emboîtés les uns dans les autres, les contenants étant en configuration de compression.
La figure 53 représente une vue de côté d'une pluralité de chariots selon le mode de réalisation illustré en figure 41, les chariots étant en configuration de stockage et étant emboîtés les uns dans les autres, les contenants étant en configuration de compression.
La figure 54 représente une autre vue en perspective d'une pluralité de chariots selon le mode de réalisation illustré en figure 41, les chariots étant en configuration de stockage et étant emboîtés les uns dans les autres, les contenants étant en configuration de compression.
La figure 55 représente une vue de devant d'une pluralité de chariots selon le mode de réalisation illustré en figure 41, les chariots étant en configuration de stockage et étant emboîtés les uns dans les autres, les contenants étant en configuration de compression.
La figure 56 représente une vue extérieure d'un chariot selon un autre mode de réalisation.
La figure 57 représente une vue de profil du chariot selon la figure 56.
La figure 58 représente une vue de dessus d'un chariot selon la figure 56.
La figure 59 représente un agrandissement d'une partie du chariot selon la figure 56, en particulier de la structure de suspension, selon un mode de réalisation de la présente invention.
La figure 60 représente un agrandissement d'une partie du chariot selon la figure 56, en particulier du dispositif de mesure, selon un mode de réalisation de la présente invention.
La figure 61 représente un agrandissement d'une partie du chariot selon la figure 56, en particulier du capteur de force, selon un mode de réalisation de la présente invention.
La figure 62 représente deux chariots emboîtés selon un autre mode de réalisation de la présente invention.
La figure 63 représente un schéma de l'emboîtement vu de dessus entre deux chariots selon un autre mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- Selon un exemple, le chariot comprend au moins un cache supporté par le cadre et disposé au-dessus du dispositif de mesure de sorte à ce que lorsqu'une force, présentant une composante verticale, est appliquée par un utilisateur sur le cache, cette composante verticale soit transmise depuis le cache jusqu'au cadre puis au châssis puis au sol sans être transmise à la structure de suspension. Cela permet de protéger les capteurs de force de l'appui sur le cadre d'un utilisateur.
   Cela permet une isolation mécanique du dispositif de mesure par rapport au cadre.
- Selon un exemple préféré, le cache repose intégralement sur le cadre.
- Selon un exemple, le cache n'est pas en contact mécanique avec le dispositif de mesure.
- Selon un exemple, le dispositif de mesure est suspendu au cadre.
- Selon un exemple, le cadre comprend au moins une ouverture, une gorge ou un évidement. Le dispositif de mesure est disposé à l'intérieur de l'ouverture. De préférence, le dispositif de mesure ne forme pas saillie au-delà de l'ouverture. Ainsi, cela permet d'optimiser l'intégration de ce dernier dans le cadre. Le dispositif de mesure est ainsi bien protégé. De préférence, le cadre comprend deux ouvertures chacune répartie de part et d'autre d'un plan médian du chariot. Chaque bras du cadre présente au moins une ouverture.
- Selon un exemple, le cadre comprend une première partie et une deuxième partie, et l'ouverture délimite les premières et deuxièmes parties. Ainsi, l'ouverture et à la jonction des premières deuxième partie.
- Selon un exemple, Le dispositif de mesure est inséré dans une portion du cadre, de préférence entre deux parties du cadre.
- Selon un mode de réalisation, chaque bras du chariot comprend au moins un dispositif de mesure disposé entre une première partie du cadre et une deuxième partie du cadre, la première partie du cadre et la deuxième partie du cadre définissant en partie au moins ledit bras.
- Selon un exemple, le châssis présente une partie avant et une partie arrière, la partie avant présentant une première dimension en largeur, la partie arrière présentant une deuxième dimension en largeur, la première dimension en largeur étant inférieure à la deuxième dimension en largeur.
- Selon un exemple, le contenant présente une partie avant et une partie arrière, la partie avant présentant une première dimension en largeur, la partie arrière présentant une deuxième dimension en largeur, la première dimension en largeur étant supérieure à la deuxième dimension en largeur.
- Selon un exemple, la partie avant du contenant est configurée pour venir entourer une partie au moins de la partie arrière du contenant d'un autre chariot en configuration de stockage.
- Selon un exemple, le contenant comprend au moins un clapet disposé à l'avant dudit contenant. De préférence, le clapet forme entièrement ou partiellement une paroi du contenant. De préférence, ledit clapet étant solidarisé au contenant au travers au moins d'un élément charnière comprenant au moins un axe de rotation, ledit clapet étant configuré pour présenter sélectivement une première configuration dans laquelle le clapet définit une paroi du contenant et une deuxième configuration dans laquelle le clapet s'étend le long d'une paroi du contenant, le clapet étant configuré pour être mobile en rotation autour dudit axe de rotation de sorte à permuter sélectivement d'une configuration à une autre. Selon un mode de réalisation non limitatif, la première configuration correspond à une configuration couchée et la deuxième configuration correspond à une configuration levée.
- De préférence, dans la deuxième configuration, le clapet s'étend principalement selon un plan horizontal.
- Selon un exemple, le clapet est en configuration couchée lorsqu'un autre chariot est emboîté dans le chariot.
- Selon un exemple, l'élément charnière comprend au moins un élément de rappel configuré pour maintenir le clapet en configuration levée lorsqu'un autre chariot n'est pas emboîté dans le chariot.
- Selon un exemple, le chariot comprend au moins un dispositif de mesure additionnel porté en partie au moins par le châssis, étant destiné à mesurer au moins un paramètre relatif au poids de l'au moins un contenant et étant disposé sous le contenant.
- Selon un exemple, le contenant est solidaire du chariot, de préférence uniquement, au travers d'un ou de plusieurs dispositifs de mesure.
- Selon un exemple, la structure de suspension présente une dimension en hauteur qui diminue le long d'une direction correspondant à la direction d'emboîtement dudit chariot dans un autre chariot de sorte à autoriser l'emboîtement au moins partiellement du chariot dans un autre chariot ayant une structure de suspension identique à la structure de suspension dudit chariot
- Selon un exemple, le cadre présente une dimension en hauteur qui diminue le long d'une direction correspondant à la direction d'emboîtement dudit chariot dans un autre chariot de sorte à autoriser l'emboîtement au moins partiellement du chariot dans un autre chariot ayant une structure de suspension identique à la structure de suspension dudit chariot
- Selon un exemple, le chariot comprend au moins un doigt de coaxialité porté en partie au moins par le châssis, étant configuré pour venir en prise sur une butée portée par le contenant, la coopération entre le doigt de coaxialité et la butée étant destinée à limiter le balancement dudit contenant. Selon un exemple, la butée est formée par une ouverture portée par le contenant. En venant buter sur les bords de ladite ouverture, le doigt de coaxialité limite le balancement dudit contenant.
- Selon un exemple, la partie avant du châssis est configurée pour venir s'emboîter dans une partie au moins de la partie arrière du châssis d'un autre chariot en configuration de stockage.
- Selon un exemple optionnel, le chariot comprend un dispositif de préhension destiné à être appréhendé par l'utilisateur pour déplacer, de préférence manuellement, ledit chariot.
- Selon un exemple, le dispositif de mesure est porté entièrement par la structure de suspension.
- Cela permet de mesurer un paramètre relatif au poids de l'au moins un contenant destiné à être suspendu par la structure de suspension.
- Selon un exemple, le dispositif de mesure comprend au moins un capteur de force destiné à mesurer le paramètre relatif au poids de l'au moins un contenant et de l'au moins un produit qu'il contient, de préférence ledit capteur de force comprenant une jauge de déformation. Cela permet de mesurer un paramètre relatif au poids de l'au moins un contenant.
- Selon un exemple, la structure de suspension présente une pluralité de zones d'accueils destinées à suspendre au moins deux et avantageusement au moins trois contenants. Cela permet de suspendre plusieurs contenants selon les besoins de l'utilisateur.
- Selon un exemple, la coopération de la structure de suspension dudit chariot avec la structure de suspension dudit autre chariot pour permettre l'emboîtement au moins partiel dudit chariot dans ledit autre chariot comprend au moins l'un des modes de réalisation suivants :
   i. les structures de suspension sont montées mobiles sur le chariot. Elles sont par exemple articulées en rotation autour d'un axe par exemple horizontal. Selon un mode de réalisation alternatif elles sont montées coulissantes sur le chariot. La mobilité des structures de suspension permet, en configuration de stockage, de ne pas entraver l'emboîtement d'un chariot dans un autre chariot.
   ii. les structures de suspension présentent des formes permettant l'emboîtement d'un chariot dans un autre chariot.
- Selon un exemple, la structure de suspension est articulée en rotation sur la structure porteuse, autour d'un axe parallèle au sol, de préférence horizontal. Cela permet d'autoriser le soulèvement de la structure de suspension afin de faciliter l'emboîtement du chariot avec un autre chariot ayant une structure de suspension identique à la structure de suspension dudit chariot. Ainsi on obtient un emboîtement compact.
- Selon un exemple, la structure de suspension est configurée pour présenter une configuration de portage et une configuration de stockage différente de la configuration de portage, ladite configuration de portage autorisant la suspension de l'au moins un contenant par la structure de suspension en particulier lorsque le chariot roule, dans ladite configuration de portage, la structure de suspension étant au contact d'une butée portée par la structure porteuse empêchant une rotation de la structure de suspension sous l'effet de la gravité, ladite configuration de stockage étant configurée pour autoriser l'emboîtement au moins partiellement du chariot avec un autre chariot ayant une structure de suspension identique à la structure de suspension dudit chariot, dans la configuration de stockage, la structure de suspension dudit chariot étant à distance de la butée.
   Cela permet à l'utilisateur de choisir la configuration du chariot selon l'utilisation qu'il souhaite en faire.
- Selon un exemple, la structure de suspension est configurée de sorte à, en configuration de portage, s'étendre selon une direction parallèle au sol.
- Selon un exemple, la structure de suspension est montée en rotation libre sur la structure porteuse.
- Selon un exemple, le chariot comprend un vérin configuré pour maintenir la structure de suspension en configuration de stockage au moins lorsque la structure de suspension ne suspend aucun contenant.
   Cela permet de faciliter l'emboîtement du chariot avec un autre chariot ayant une structure de suspension identique à la structure de suspension dudit chariot. Ainsi on obtient un emboîtement compact.
- Selon un exemple, la structure de suspension est conformée de sorte à présenter une surface supérieure en partie au moins dentelées formant lesdites zones d'accueils. Cela permet de suspendre et de maintenir de façon stable les éventuelles anses ou poignées de l'au moins un contenant sur les zones d'accueils.
- Selon un exemple, la structure de suspension comprend au moins une barre de suspension conformée pour pénétrer au moins partiellement dans l'au moins un contenant.
   Cela permet de faciliter le positionnement de l'au moins un contenant sur la structure de suspension.
- Selon un exemple, la structure de suspension comprend au moins un premier bras et un deuxième bras s'étendant de part et d'autre dudit chariot respectivement selon une première direction et une deuxième direction, la première direction et la deuxième direction étant concourantes.
- Selon un exemple, la structure de suspension présente une dimension en hauteur qui diminue le long d'une direction correspondant à la direction d'emboîtement dudit chariot dans un autre chariot de sorte à autoriser l'emboîtement au moins partiellement du chariot dans un autre chariot ayant une structure de suspension identique à la structure de suspension dudit chariot.
   Cela permet de faciliter l'emboîtement du chariot dans un autre chariot ayant une structure de suspension identique à la structure de suspension dudit chariot. Ainsi on obtient un emboîtement compact.
- Selon un exemple, les premier bras et deuxième bras sont conformés de sorte à présenter chacun au moins deux premières portions, par exemple horizontales s'étendant selon deux directions parallèles au sol ou présentant une première inclinaison par rapport au sol. En outre, les premier bras et deuxième bras sont conformés de sorte à présenter chacun au moins une deuxième portion, par exemple verticale s'étendant selon une direction orthogonale au sol ou présentant une deuxième inclinaison par rapport au sol, la deuxième inclinaison étant supérieure à la première inclinaison. La deuxième portion séparant les deux premières portions, de sorte à permettre l'emboîtement dudit chariot en partie au moins avec au moins un autre chariot ayant une structure de suspension identique à la structure de suspension dudit chariot en emboîtant la structure de suspension dudit chariot avec la structure de suspension dudit au moins un autre chariot.
- Selon un exemple, la structure de suspension présente une dimension en longueur L2 et est configurée de sorte à autoriser une variation de ladite dimension en longueur L2. Cela permet d'adapter la dimension en longueur L2 selon les besoins de l'utilisateur. De manière générale, les longueurs sont mesurées selon une direction parallèle à la direction d'avancée privilégiée du chariot.
- Selon un exemple, la dimension en longueur L2 est supérieure à 5 cm, de préférence à 15 cm et est avantageusement égale à 25 cm.
- Selon un exemple, les bras comprennent des portions télescopiques lesquelles sont configurées chacune pour présenter une configuration déployée des portions télescopiques des bras et une configuration repliée des portions télescopiques des bras, ladite configuration repliée permettant audit chariot d'être emboîté avec au moins un autre chariot ayant une structure de suspension identique à la structure de suspension dudit chariot.
   Cela permet de faciliter l'emboîtement du chariot dans un autre chariot ayant une structure de suspension identique à la structure de suspension dudit chariot. Ainsi on obtient un emboîtement compact.
- Selon un exemple, la structure de suspension présente une dimension en largeur I2 étant conformée pour diminuer le long d'une direction correspondant à la direction d'emboîtement dudit chariot dans un autre chariot de sorte à autoriser l'emboîtement au moins partiellement du chariot dans un autre chariot ayant une structure de suspension identique.
   Cela permet de faciliter l'emboîtement du chariot dans un autre chariot ayant une structure de suspension identique à la structure de suspension dudit chariot. Ainsi on obtient un emboîtement compact.
   De manière générale, les largeurs sont mesurées selon une direction perpendiculaire à la direction d'avancée privilégiée du chariot.
- Selon un exemple, la dimension en largeur I2 est inférieure à 21 cm, de préférence à 14 cm et est avantageusement égale à 7 cm.
- Selon un exemple, les bras de la structure de la suspension sont solidaires l'un de l'autre au moyen d'au moins une portion télescopique de solidarisation, ladite portion télescopique de solidarisation étant configurée pour présenter une configuration déployée, dans laquelle les bras sont dans une position éloignée l'un de l'autre, et une configuration repliée, dans laquelle les bras sont dans une position rapprochée l'un de l'autre et dans laquelle le chariot est apte à être emboîtés avec au moins un autre chariot ayant une structure de suspension identique à la structure de suspension dudit chariot.
- Selon un exemple, le chariot comprend au moins un bac entièrement suspendu à la structure porteuse par au moins un rebord, de préférence par au moins deux rebords, avantageusement opposé l'un à l'autre, et au moins un rebord comprend au moins un dispositif de mesure additionnel du poids dudit bac suspendu et de l'au moins un produit destiné à y être déposé.
   Cela permet de déposer et de peser des produits lourds.
- Selon un exemple, le bac suspendu comprend au moins une ouverture configurée pour accueillir en partie au moins au moins la barre de suspension d'au moins un autre chariot ayant une barre de suspension identique à la barre de suspension dudit chariot et lorsque le chariot et l'autre chariot sont emboîtés l'un avec l'autre. Cela permet de faciliter l'emboîtement du chariot dans un autre chariot ayant une structure de suspension identique à la structure de suspension dudit chariot. Ainsi on obtient un emboîtement compact.
- Selon un exemple, le chariot comprend au moins un réceptacle destiné à recevoir au moins un produit et étant supporté par ledit châssis, et dont le poids est mesuré par ledit dispositif de mesure.
   Cela permet de déposer et peser des produits lourds et encombrants.
- Selon un exemple, le réceptacle présente au moins une paroi latérale configurée pour être mobile en rotation autour d'un axe de rotation, de préférence parallèle au sol, de sorte à ce que la paroi ou puisse passer d'une configuration dans laquelle la paroi est disposée selon une première position définissant un contenant fermé avec les autres parois du réceptacle à une configuration dans laquelle ladite paroi est disposée selon une deuxième position, inclinée par rapport à la première position autour de l'axe de rotation et permet, audit chariot d'être emboîté au moins partiellement avec au moins un autre chariot ayant un réceptacle identique au réceptacle dudit chariot.
   Cela permet de faciliter l'emboîtement du chariot dans un autre chariot ayant un réceptacle identique au réceptacle dudit chariot. Ainsi on obtient un emboîtement compact.
- Selon un exemple, le chariot est configuré de sorte à ce que lorsqu'une force appliquée par un utilisateur sur le dispositif de préhension présente une composante verticale, cette composante verticale est transmise depuis le dispositif de préhension jusqu'au châssis puis au sol sans être transmise à la structure porteuse et à la structure de suspension. Cela permet à l'utilisateur de prendre appui sur le dispositif de préhension pour déplacer le chariot tout en évitant de perturber la mesure d'un paramètre relatif au poids de l'au moins un contenant et de l'au moins un produit qu'il contient.
- Selon un exemple, le chariot comprend au moins un cadre porté par le châssis, le cadre étant configuré pour que lorsqu'une force, présentant une composante verticale, est appliquée par un utilisateur sur le cadre, cette composante verticale soit transmise depuis le cadre jusqu'au châssis puis au sol sans être transmise à la structure porteuse et à la structure de suspension.
   Cela permet que la cadre interdise l'accès pour un appui par l'utilisateur sur la structure de suspension. Ainsi l'utilisateur peut prendre appui sur le chariot, en particulier sur le cadre en évitant de perturber la mesure d'un paramètre relatif au poids de l'au moins un contenant et de l'au moins un produit qu'il contient.
- Selon un exemple, le cadre est configuré pour définir une enveloppe renfermant un volume interne et les zones d'accueils de la structure de suspension se situent au sein dudit volume interne.
- Selon un exemple, le cadre est distant de la structure de suspension.
- Selon un exemple, le chariot comprend au moins un dispositif d'affichage, lequel est configuré pour afficher le prix d'un produit dont au moins un paramètre relatif au poids est mesuré par le dispositif de mesure.
   Cela permet à l'utilisateur de suivre le prix de l'au moins un produit destiné à être contenu dans l'au moins un contenant.
- Selon un exemple, la structure de suspension comprend au moins deux contenants, également désignés caissons ou bacs, destinés à recevoir l'au moins un contenant et le produit qu'il contient.
- Selon un exemple, la structure de suspension comprend au moins un contenant présentant au moins deux zones d'accueil destinée à suspendre un contenant additionnel.
- Selon un exemple, la structure de suspension comprend au moins un premier contenant et un deuxième contenant, dont l'un au moins est configuré pour translater par rapport au cadre de sorte à ce que, dans une configuration rétractée du chariot, le premier contenant se loge en partie au moins dans le deuxième contenant. Ce mode de réalisation est combinable avec toutes les caractéristiques et tous les effets techniques mentionnés ci-dessus.
- Selon un exemple, le chariot est configuré de sorte que le premier contenant se loge entièrement à l'intérieur du deuxième contenant en configuration rétractée, c'est-à-dire lorsque le chariot est emboîté au moins partiellement dans l'autre chariot.
- Selon un exemple, le chariot est configuré de sorte à présenter une configuration déployée des contenants, le passage de la configuration rétractée à la configuration déployée s'effectuant par gravité.
- Selon un exemple, l'au moins un contenant est monté coulissant sur la structure de suspension pour translater par rapport au cadre, la direction de coulissement étant inclinée de sorte à entraîner en translation l'au moins un contenant par gravité.
- Selon un exemple, le chariot est configuré de sorte à présenter une configuration déployée des contenants et le passage de la configuration déployée à la configuration rétractée s'effectue en emboîtant le chariot dans un autre chariot.
- Selon un exemple, le chariot comprend au moins trois contenants, chaque contenant étant monté coulissant sur la structure de suspension. De préférence, de sorte à coulisser lorsque le chariot est emboîté dans un autre chariot et/ou lorsque le chariot est dés-emboîté par rapport à un autre chariot.
- Selon un exemple, le ou les contenants sont rigides, c'est-à-dire qu'ils ne sont pas déformables manuellement.
- Selon un exemple, alternatif, le contenant est déformable et se déforme lorsque le chariot est emboîté dans un autre chariot. Le contenant est souple ou froissable. Selon un exemple, le contenant présente des zones privilégiées de déformation. Selon un exemple, le contenant passe d'une configuration rétractée à une configuration déployée par gravité, le contenant ayant au moins l'une de ses extrémités qui peut coulisser le long de la structure de suspension, en étant entraîné par son point. Selon un exemple, le contenant est formé au moins en partie de tissu ou de toile.
- Selon un exemple, le chariot comprend au moins un contenant dans lequel au moins un produit est destiné à être placé.
- Selon un exemple, l'au moins un contenant est rigide, c'est-à-dire qu'il n'est pas déformable manuellement.
- Selon un exemple, la structure de suspension, l'au moins un contenant et le châssis dudit chariot sont conformés pour coopérer avec la structure de suspension, l'au moins un contenant et le châssis d'un autre chariot de sorte à permettre l'emboîtement au moins partiel d'une partie au moins dudit chariot dans une partie au moins dudit autre chariot par coopération de la structure de suspension, de l'au moins un contenant et du châssis dudit chariot avec la structure de suspension, l'au moins un contenant et le châssis dudit autre chariot.
- Selon un exemple, la structure de suspension, l'au moins un contenant et le châssis dudit chariot étant conformés pour coopérer avec la structure de suspension, l'au moins un contenant et le châssis d'un autre chariot de sorte à permettre l'emboîtement au moins partiel d'une partie au moins dudit autre chariot dans une partie au moins dudit chariot par coopération de la structure de suspension, de l'au moins un contenant et du châssis dudit autre chariot avec la structure de suspension, l'au moins un contenant et le châssis dudit chariot.

Il est précisé que dans le cadre de la présente invention, le terme « identique » utilisé tel que par exemple « un premier élément identique à un deuxième élément » signifie que ces deux éléments présentent des caractéristiques structurellement et/ou fonctionnellement similaires. Dans tous les modes de réalisation qui sont décrits ci-dessous, les termes bacs, contenants, caissons ou réceptacles sont considérés comme équivalents et peuvent être substitués les uns aux autres.

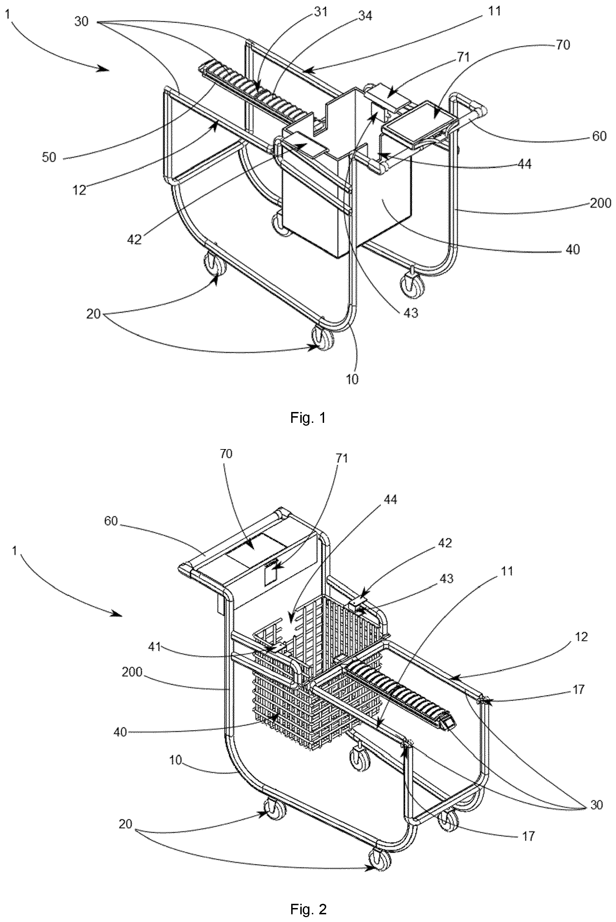

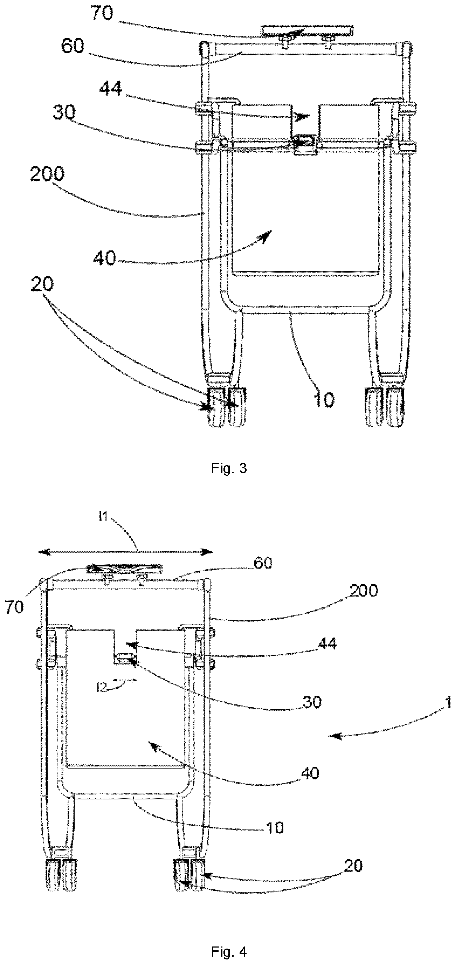

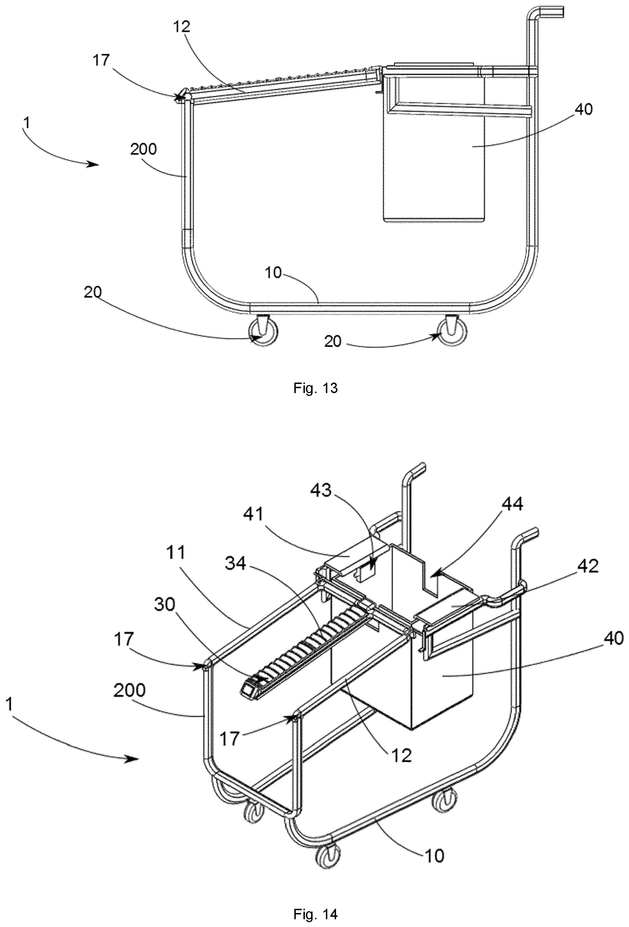

Nous allons à présent décrire l'invention selon ses nombreux modes de réalisation au travers des figures 1 à 32.

La présente invention concerne un chariot 1, par exemple pour supermarché tel que décrit par la suite. Le chariot 1 est un chariot de transport, permettant ainsi de transporter des charges. A titre d'exemple non limitatif, ces charges sont des articles de courses disposés dans un contenant.

Le chariot 1 pourrait aussi être utilisé dans tous domaines industriels nécessitant le transport de charges, tel que le domaine de l'industrie agroalimentaire ou encore dans les aéroports pour le transport de bagages.

Les figures 1 à 11 représentent le chariot 1, lequel comprend au moins un dispositif de mesure 50 d'un paramètre relatif au poids de l'au moins un contenant et de l'au moins un produit. L'au moins un produit est généralement placé dans l'au moins un contenant par l'utilisateur.

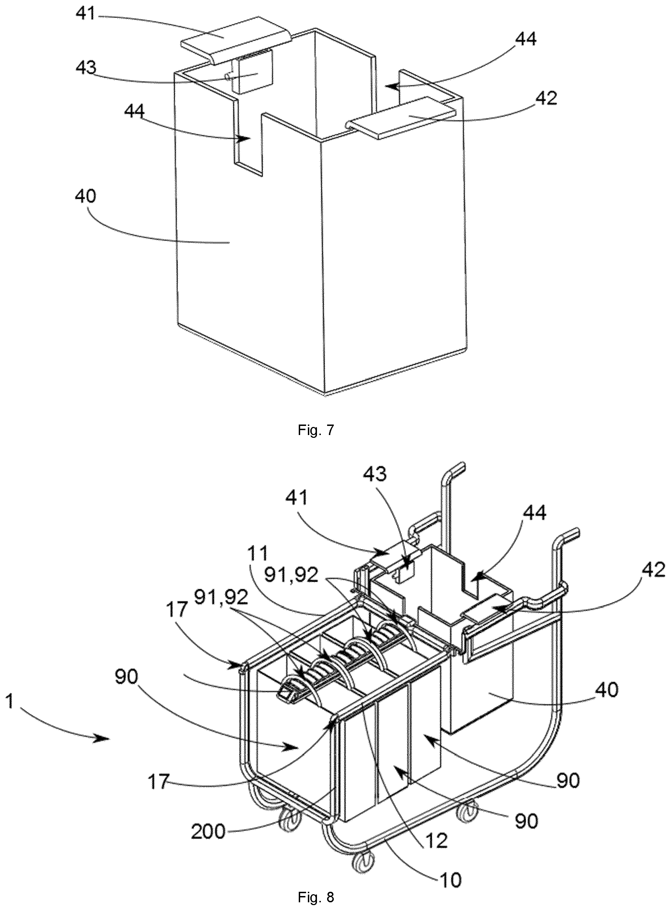

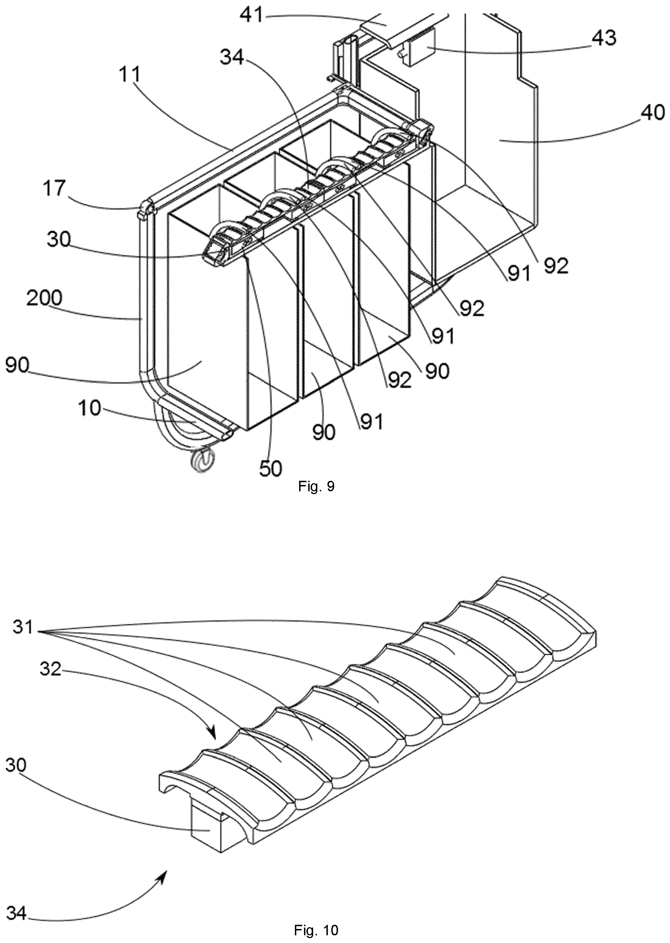

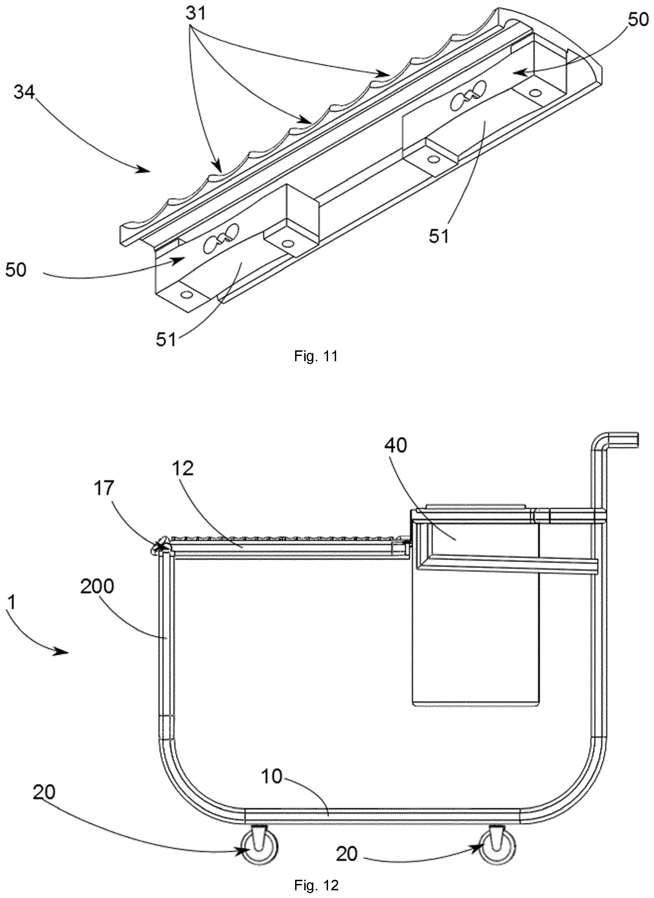

Selon un mode de réalisation, le contenant peut être un bac suspendu 40 tel que représenté dans les figures 1 à 9 par exemple. Selon un autre mode de réalisation compatible avec le précédent, le contenant peut également être un sac 90 de type sachet plastique, sac cabas ou sac rigide tel que représenté en figures 8 et 9 par exemple. De manière générale, l'au moins un contenant (40, 90) peut être tout élément ayant pour fonction de contenir l'au moins un produit. Le dispositif de mesure 50 peut comprendre au moins un capteur de force 51, qui peut également être désigné capteur de force, représenté par la figure 11 par exemple. Le dispositif de mesure est configuré pour mesurer un paramètre relatif au poids de l'au moins un contenant (40, 90) et de l'au moins un produit qu'il contient. Par exemple, le dispositif de mesure 50 peut être configuré pour former un capteur de poids de type porte-à-faux.

Selon un exemple, le capteur de force 51 comprend une jauge de déformation ou jauge de contrainte. Le capteur de force 51 peut être un capteur dit « point unique », en forme de S. Cela permet de mesurer un paramètre relatif au poids de l'au moins un contenant (40, 90) et de l'au moins un produit qu'il contient. Dans un cas préférentiel où l'au moins un contenant (40, 90) présente un poids négligeable, le dispositif de mesure 50 mesure principalement un paramètre relatif au poids de l'au moins un produit. Dans un cas alternatif où l'au moins un contenant (40, 90) présente un poids non négligeable, la présente invention propose un chariot 1 capable de soustraire le poids de l'au moins un contenant (40, 90) du poids total mesuré afin d'obtenir seulement la mesure du poids de l'au moins un produit.

Le chariot 1 comprend au moins un châssis 10. Par « châssis », on entend un bâti rigide destiné à supporter d'autres éléments du chariot 1. Le châssis 10 est supporté par au moins trois organes d'appui 20 configurés pour supporter le chariot 1 sur un sol de manière isostatique. Au moins deux des au moins trois organes d'appui 20 comprennent chacun au moins un dispositif roulant, de préférence les au moins trois organes d'appui 20 comprennent au moins un dispositif roulant. Le dispositif roulant comprend préférentiellement au moins une roue. Selon un exemple, le dispositif roulant est une roue. De manière alternative, le dispositif roulant est une sphère réduisant le point de contact entre le dispositif roulant et le sol permettant d'augmenter la maniabilité du chariot. Selon un autre exemple, le dispositif roulant est une chenille. Les au moins trois organes d'appui 20 sont présents selon tous les modes de réalisations décrits par l'invention. De plus, le chariot 1 comprend une structure porteuse 200 supportée par le châssis 10. Par « structure porteuse », on entend tout élément ou ensemble d'éléments exerçant une fonction de soutien. A titre d'exemple, la structure porteuse 200 peut se manifester sous forme d'un cadre, ou de poutres verticales ou encore de colonnes.

La structure porteuse 200 supporte une structure de suspension 30. Par « structure de suspension », on entend tout élément ou ensemble d'éléments exerçant une fonction de suspension. A titre d'exemple non limitatif, la structure de suspension 30 peut être l'un parmi une barre, une plateforme, un crochet, une poignée, une partie d'un cadre. La structure de suspension 30 présente des zones d'accueil 31. Les zones d'accueil 31 sont configurées pour suspendre l'au moins un contenant (40, 90) dans lequel l'au moins un produit est destiné à être placé.

De manière préférée, le dispositif de mesure 50 est porté par la structure de suspension 30. Ainsi lorsque l'au moins un contenant (40, 90) contient l'au moins un produit et est suspendu par la structure de suspension 30, l'utilisateur peut connaître le poids de l'au moins un contenant (40, 90) et de l'au moins un produit par le biais de la mesure effectuée par le dispositif de mesure 50.

De manière préférée, le dispositif de mesure 50 porté par la structure de suspension 30 peut mesurer des poids compris entre 1g et 30 kg par capteur.

A titre d'exemple non limitatif, la structure de suspension 30 présente une dimension en longueur L2 configurée pour suspendre au moins un, de préférence au moins deux et avantageusement au moins trois contenants 90. Ainsi la structure de suspension 30 est assez longue pour permettre à l'utilisateur de suspendre la totalité des contenants 90. Avantageusement, elle présente une dimension en largeur I2.

Par ailleurs, le chariot 1 comprend un dispositif de préhension 60 tel que représenté sur les figures 1 à 4. Ce dispositif de préhension 60 est destiné à être appréhendé par l'utilisateur. Ainsi l'utilisateur peut piloter manuellement le chariot 1. Le dispositif de préhension 60 peut se présenter sous forme de poignées, ou encore sous forme de barre rigide. Le chariot 1 est aussi avantageusement configuré de sorte à ce que lorsqu'une force appliquée par un utilisateur sur le dispositif de préhension 60 présente une composante verticale, cette composante verticale est transmise du dispositif de préhension 60 au châssis 10 puis au sol sans être transmise à la structure porteuse 200 et à la structure de suspension 30. Ainsi lorsque l'utilisateur parcourt les différents rayons du supermarché, et par conséquent est amené à saisir le dispositif de préhension 60 du chariot 1 pour le déplacer, la force appliquée par l'utilisateur sur le chariot 1 ne perturbe pas la mesure.

Afin de communiquer le poids mesuré à l'utilisateur, le chariot 1 peut comprendre au moins un dispositif d'affichage 70. Le dispositif d'affichage 70 est configuré pour afficher des informations du type au moins l'un parmi : instructions pour l'utilisateur, vérification de la validation de l'au moins un produit, liste des produits validés, informations diverses sur l'au moins un produit, prix de l'au moins un produit, photos représentant l'au moins un produit.

De plus, le chariot 1 comprend au moins un lecteur optique 71. Cela permet à l'utilisateur de lire les informations stockées sous la forme de codes-barres de chaque produit avant de l'insérer dans l'au moins un contenant (40, 90) et/ou de le disposer dans le chariot 1.

Selon un mode de réalisation, le lecteur optique 71 enregistre le prix/kg référencé de l'au moins un produit et le dispositif d'affichage 70 peut afficher le prix à payer par l'utilisateur pour ce produit en fonction du poids mesuré par le dispositif de mesure 50.

L'utilisation d'un lecteur optique 71 permet d'associer un prix à chaque produit sélectionné, cela en fonction ou non du poids du produit. De plus, cela permet d'éviter les fraudes lors des courses en supermarchés. En effet, il est connu que beaucoup de personnes ne scannent pas volontairement tous les produits sélectionnés afin de payer des courses moins chères. Cette étape de pesée permet notamment de s'assurer que chaque produit placé par l'utilisateur dans le chariot 1a bien fait l'objet d'un scan et donc a bien été comptabilisé pour son règlement. En effet, si le poids mesuré par le dispositif de mesure 50 d'un produit est différent du poids du produit lu par le lecteur optique au travers d'un code-barres par exemple, il est alors facile de savoir que des produits différents ou supplémentaires ont été introduits dans le chariot 1, y compris sans avoir été scanné préalablement par le lecteur optique 71.

De manière particulièrement avantageuse et afin de compenser une erreur dérivative temporelle du dispositif de mesure 50, le dispositif de mesure 50 peut comprendre une tare dite « tare virtuelle » effectuée entre chaque insertion de l'au moins un produit au sein du chariot 1. Cela permet d'éviter de multiplier la marge d'erreur sur chaque produit, en effet une fois un produit validé, le poids de référence est mis à jour et devient le poids pesé lors de la validation. Bien que le poids de l'au moins un produit n'est pas affiché par le dispositif d'affichage 70, l'invention comprend une étape de validation, laquelle comprend des algorithmes utilisant la donnée relative au poids de l'au moins un produit. Cela permet d'améliorer la détection de fraudes ou encore d'effectuer des analyses statistiques. De plus, l'absence de l'affichage du poids de l'au moins un produit 90 sur le dispositif d'affichage 70 permet d'éviter que l'utilisateur puisse substituer l'au moins un produit par un autre produit facilement en ayant le paramètre relatif au poids visible sur le dispositif d'affichage 70.

Le lecteur optique 71 peut être amovible du chariot 1 ou peut être fixe.

Avantageusement le dispositif d'affichage 70 est porté par la structure de préhension 60. Cela permet à l'utilisateur d'avoir toujours une vision sur le prix de ses courses lorsqu'il parcourt les différents rayons. Ainsi l'utilisateur peut adapter au fur et à mesure de ses courses, ses achats en fonction de son budget.

Un autre aspect de l'invention est que la structure de suspension 30 est conformée pour coopérer avec la structure de suspension 30 d'un autre chariot 1 de sorte à permettre l'emboîtement au moins partiellement de la structure porteuse 200 dans une structure porteuse 200 d'un autre chariot 1. Ainsi la présente invention décrit à travers ses nombreux modes de réalisations, un chariot 1 autorisant à la fois une étape de pesée de l'au moins un contenant (40, 90) et de l'au moins un produit et à la fois un emboîtement très compact du chariot 1 dans un autre chariot 1 ayant une structure de suspension identique.

On qualifie d'emboîtement la faculté d'insérer une partie au moins d'un chariot, typiquement au moins 10% et de préférence au moins 20% et de et de préférence au moins 30% de la longueur d'un chariot dans un autre chariot.

A titre d'exemple non limitatif, la distance d'emboîtement, c'est-à-dire la longueur d'un chariot que l'on peut insérer dans un autre chariot est de 300 mm, en considérant alors des chariots de dimensions standards de l'ordre de grandeur 1300 mm × 650 mm, il est possible d'emboîter 36 chariots sur 3 files d'emboîtements séparées, soit 12 chariots par files dans des dimensions standards d'une place de parking.

Nous allons à présent décrire le mode de réalisation préféré de la présente invention.

Le chariot 1 présente avantageusement une partie avant et une partie arrière. La partie arrière correspond à la partie du chariot 1 comprenant le dispositif de préhension 60, la partie avant se situe à l'opposé de la partie arrière.

Selon un mode de réalisation préféré et tel que représenté sur les figures 12 à 18, la structure de suspension 30 est articulée en rotation sur la structure porteuse 200, autour d'un axe sensiblement horizontal. Elle est avantageusement inclinable vers le bas. De manière alternative, elle est inclinable vers le haut. Cette rotation peut s'effectuer par le biais d'une charnière 17 effectuant une liaison pivot. La charnière est portée avantageusement sur la partie avant du chariot 1. La structure de suspension 30 présente une configuration de portage et une configuration de stockage, différente de la configuration de portage. La configuration de portage autorise la suspension de l'au moins un contenant 90 par la structure de suspension 30 dans la configuration de portage. En configuration de portage, la structure de suspension 30 est au contact d'une butée portée par la structure porteuse 200 empêchant une rotation de la structure de suspension 30 sous l'effet de la gravité. La configuration de stockage autorise l'emboîtement au moins partiellement du chariot 1 avec un autre chariot ayant une structure de suspension identique dans la position de stockage, la structure de suspension 30 étant à distance de la butée.

A titre d'exemple non limitatif, la structure de suspension 30 est montée en rotation libre sur la structure porteuse 200. Le chariot 1 présente des biseaux, de préférence à roulettes sur la partie avant de la structure de suspension 30 et sur la partie arrière de la structure de suspension 30 de sorte à ce que la structure de suspension 30b d'un deuxième chariot 1b est configurée de manière à soulever la première structure de suspension 30 du premier chariot 1a afin d'autoriser l'emboîtement.

Comme indiqué précédemment, et de manière préférée, la structure de suspension 30 est conformée de sorte à présenter une surface supérieure 32 dentelée formant lesdites zones d'accueil 31 tel que représentée sur la figure 10. Ainsi il est facile pour l'utilisateur de positionner par exemple des anses ou des poignées 91,92 de l'au moins un contenant 90 sur la structure de suspension 30. Dans ce cas, la structure de suspension 30 peut être configurée de sorte à présenter au moins une barre de suspension 34. La barre de suspension 34 comprend alors le dispositif de mesure 50 de l'au moins un contenant 90 tel que le montre la figure 11. De plus, la barre de suspension 34 est conformée pour pénétrer au moins partiellement l'au moins un contenant 90, de préférence pour passer au travers de la ou des anses 91, 92 par exemple de l'au moins un contenant 90. Par conséquent, la barre de suspension 34 présente une extrémité libre.

Avantageusement, la barre de suspension 34 présente une dimension en longueur configurée pour suspendre au moins un, de préférence au moins deux et avantageusement au moins trois contenants 90.

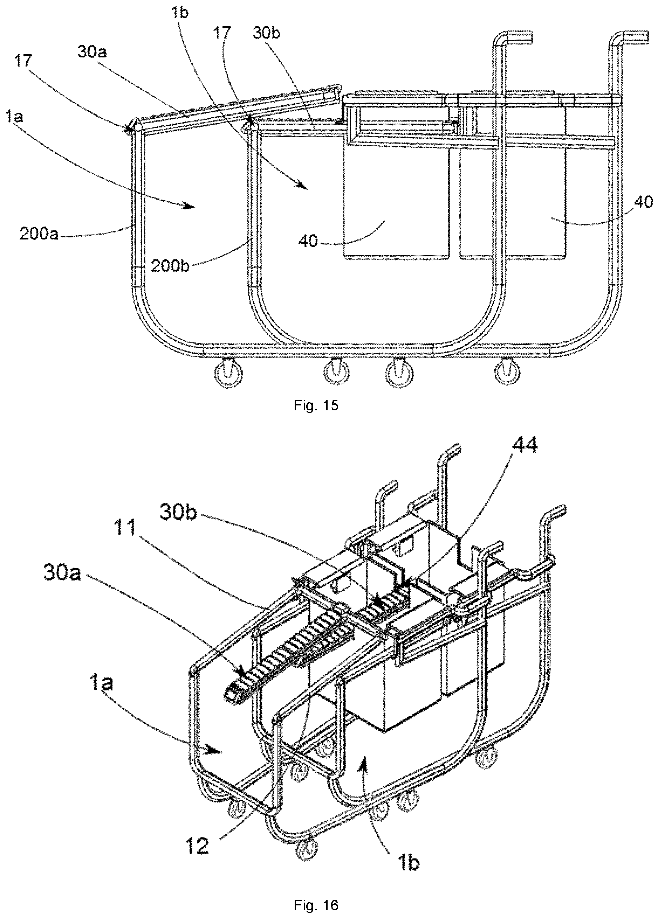

La charnière 17 se situe avantageusement sur la partie avant du chariot 1. Afin de permettre l'emboîtement, la figure 15 montre que la structure de suspension 30a du premier chariot 1a s'incline vers le haut par le biais de la charnière 17 pour laisser place à la structure de suspension 30b non inclinée d'un deuxième chariot 1b.

De manière préférée, l'au moins un contenant 90 est retiré dudit chariot 1 par la partie avant du chariot 1. En effet, il suffit de faire glisser l'au moins un contenant 90 des zones d'accueils 31 vers l'extrémité libre de la barre de suspension 34 pour retirer l'au moins un contenant 90. L'utilisateur n'a alors pas besoin de soulever l'au moins un contenant 90 de sa hauteur pour le retirer du chariot 1.

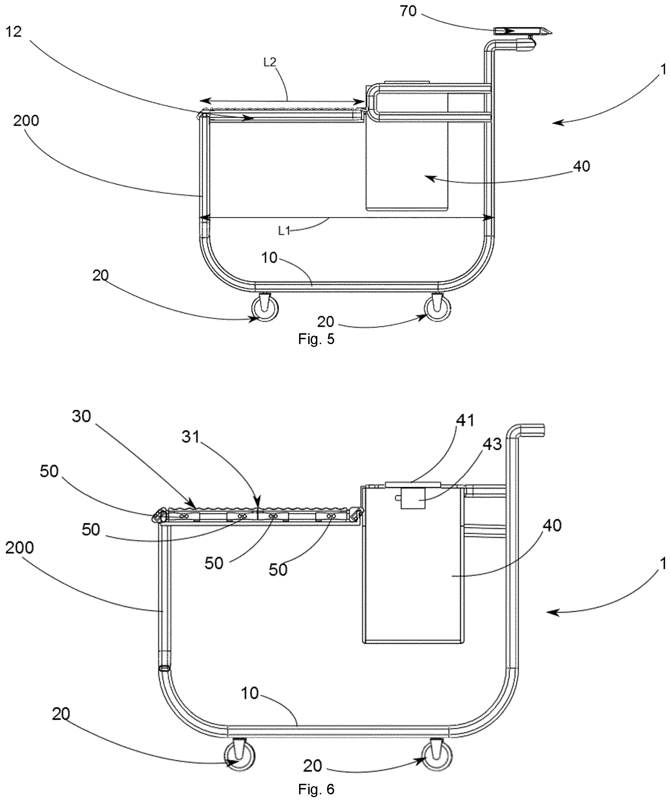

Selon un mode préféré de l'invention compatible avec le mode de réalisation précédent et tel que représenté sur les figures 1 à 8 et 12 à 18, le chariot 1 comprend au moins un bac 40 entièrement suspendu à la structure porteuse 200. On peut voir sur les figures 5 à 9 que le bac 40 est entièrement suspendu avantageusement par au moins un rebord 41 ou 42, de préférence par au moins deux rebords 41,42, avantageusement opposé l'un à l'autre. Il est possible que chaque rebord 41, 42 comprend au moins un dispositif de mesure additionnel 43 du poids dudit bac suspendu 40 et de au moins un produit qu'il contient. De préférence le dispositif additionnel 43 est un capteur de type S. Ainsi, le bac suspendu 40 permet de contenir des produits plus lourds et/ou plus encombrants tels que des produits ne pouvant pas être placés dans l'au moins un contenant 90 suspendu par la structure de suspension 30. La présente invention permet alors de mesurer un paramètre relatif au poids de produits lourds et/ou encombrants. Par « lourd », on entend des produits dont le poids est compris entre 3 et 30 kg.

De plus, le bac suspendu 40 peut comprendre au moins une ouverture 44 configurée pour accueillir au moins la barre de suspension 34 d'au moins un autre chariot ayant une barre de suspension identique et lorsque le chariot 1 et l'autre chariot sont emboîtés l'un avec l'autre. Cela permet d'autoriser l'emboîtement du chariot 1 dans un autre chariot en évitant que la barre de suspension 34 et le bac suspendu 40 ne gênent l'emboîtement.

De manière avantageuse et tel que illustré sur la figure 15 et 16, le deuxième chariot 1b peut s'imbriquer dans le premier chariot 1a jusqu'à ce que le bac du deuxième chariot 1b entre quasiment en contact avec le bac 40 du premier chariot 1a. Selon un exemple préféré, lorsque la barre de suspension 34 est inclinée vers le haut, elle ne dépasse pas la hauteur correspondant au dispositif de préhension 60.

La barre de suspension 34 est optionnellement articulée en rotation sur le chariot 1 par le biais d'une charnière.

Selon un exemple non limitatif, le bac suspendu 40 peut être amovible du chariot 1. Cela permet de faciliter l'emboîtement dans le cas où le bac suspendu 40 ne comprend pas l'au moins une ouverture 44. En effet, il suffit alors à l'utilisateur de retirer le bac suspendu 40 pour emboîter le chariot 1 avec un autre chariot.

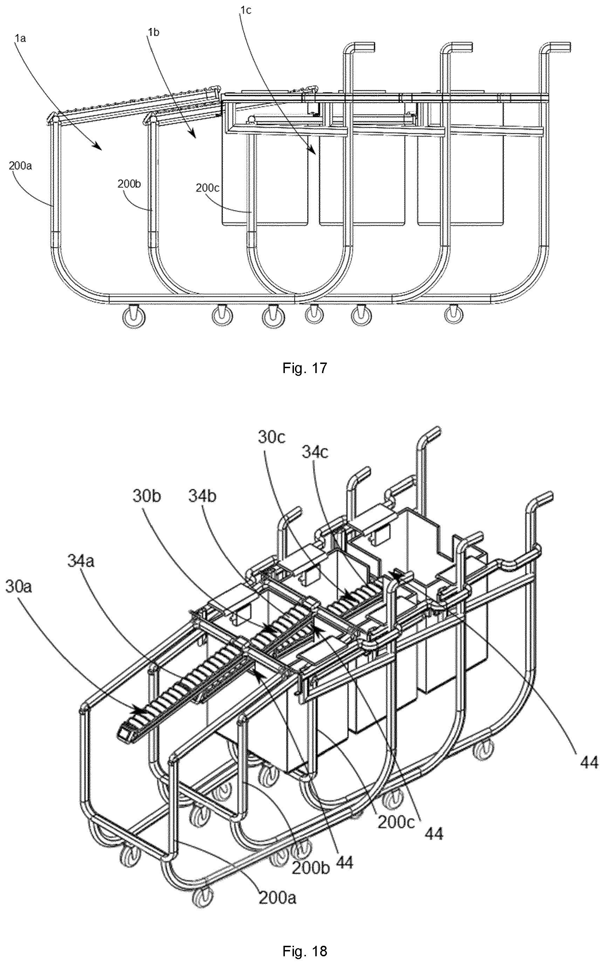

Les figures 17 et 18 décrivent l'emboîtement du premier chariot 1a avec un deuxième chariot 2a et un troisième chariot 3a. L'emboîtement des chariots peut être réalisé avec un grand nombre de chariots.

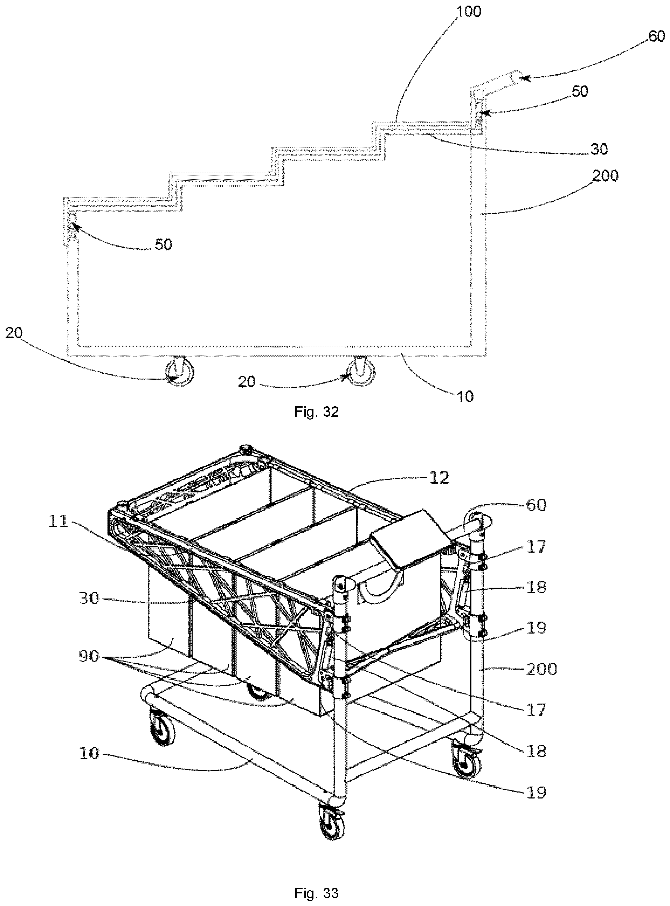

La figure 33 illustre un mode de réalisation dans lequel la structure de suspension 30 est montée en rotation autour d'un axe horizontal. Plus précisément, la structure de suspension 30 présente un premier bras 11 et un deuxième bras 12 présentant chacun une extrémité proximale articulée en rotation sur le chariot 1, typiquement sur la structure porteuse 200. Cette articulation en rotation peut être assurée par une charnière 17. Le premier bras 11 et le deuxième bras 12 présentent chacun une extrémité distale qui sont mécaniquement liées l'une à l'autre par un profil. Le premier bras 11, le deuxième bras 12 et le profil définissent ainsi un contour, qui peut être ouvert ou fermé. En configuration de portage, le premier bras 11 et le deuxième bras 12 sont au contact d'une butée 19 portée par la structure porteuse 200. Cette butée 19 reprend une partie au moins du poids des contenants suspendus 90 de la structure de suspension 30. En configuration de stockage, le premier bras 11 et le deuxième bras 12 sont éloignés de la butée 19 pour être relevés. Pour cela, ces bras 11, 12 sont entraînés en rotation autour des axes sur lesquels ils sont montés sur la structure porteuse 200.

De préférence, le chariot 1 comprend au moins un vérin 18 configuré pour maintenir la structure de suspension 30 en position lorsque la structure de suspension 30 est en configuration de stockage, au moins lorsque la structure de suspension 30 ne suspend aucun contenant 90. Typiquement, le vérin 18 présente une extrémité articulée en rotation sur la structure porteuse 200 et une autre extrémité articulée en rotation sur l'un des bras 11, 12 ou sur une structure solidaire de l'un de ces bras 11, 12. De préférence, le chariot 1 comprend deux vérins 18, chacun des vérins étant relié à l'un des bras 11, 12. La structure de suspension 30a du premier chariot 1a est réglée en configuration de stockage de sorte à être emboîtée au moins partiellement avec au moins un deuxième chariot 2a ayant une structure de suspension 30b identique réglée en configuration de stockage. Pour cela, la charnière 17 se situe sur la partie arrière du chariot 1. Dans ce cas, la structure de suspension 30a du premier chariot 1a et la structure de suspension 30b du deuxième chariot 2b sont inclinables vers le haut de sorte à autoriser l'emboîtement du premier chariot 1a avec le deuxième chariot 1b. L'emboîtement est possible jusqu'à ce que l'un parmi la structure porteuse 200a, la structure de suspension 30a du premier chariot 1a est en contact avec l'un parmi la structure porteuse 200b, la structure de suspension 30b du deuxième chariot 1b.

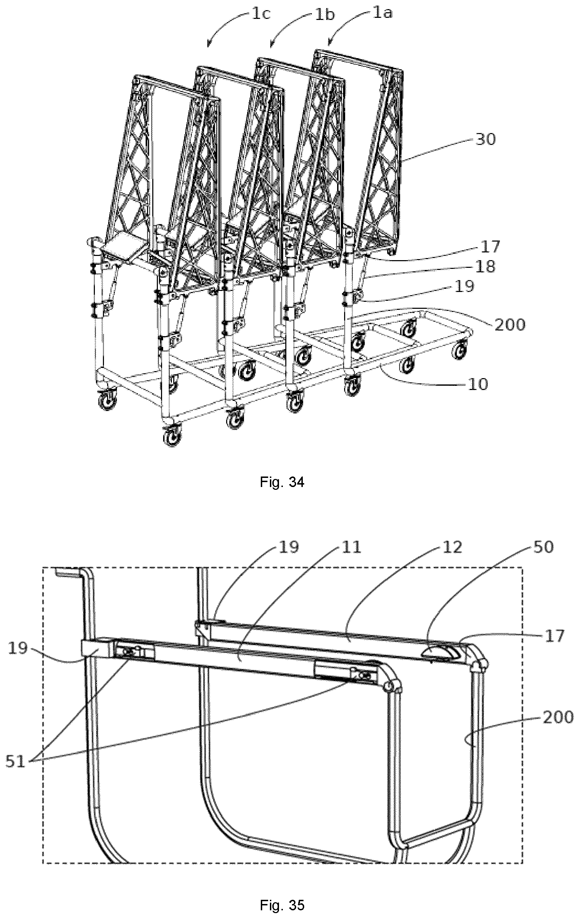

La figure 34 illustre l'emboîtement de plusieurs chariots 1 illustré en figure 33. Les structures de suspension 30 sont relevées de sorte à être placées dans leur configuration de stockage. La structure de suspension 30 d'un premier chariot 1a n'entrave alors pas l'emboîtement d'un deuxième chariot 1b dans ce premier chariot 1a.

Ce mode de réalisation permet un taux d'emboîtement particulièrement élevé c'est-à-dire que la distance d'emboîtement est importante. Ce mode de réalisation permet ainsi d'augmenter la compacité du stockage d'une pluralité de chariots 1.

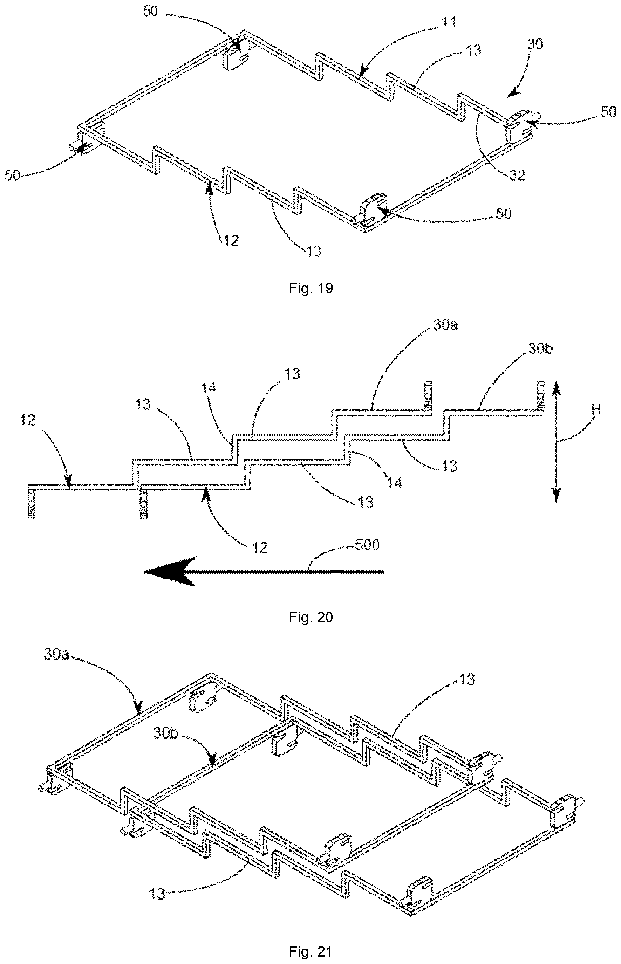

Nous allons à présent décrire au travers des figures 19 à 21, un autre mode de réalisation de la présente invention compatible avec les précédents.

Selon ce mode de réalisation, la structure de suspension 30 présente une dimension en hauteur H qui diminue le long d'une direction correspondant à la direction d'emboîtement 500 du deuxième chariot 1b dans le premier chariot 1a de sorte à autoriser l'imbrication au moins partiellement de la structure de suspension 30b du deuxième chariot 1b dans la structure de suspension 30a du premier chariot 1a. De cette façon, le deuxième chariot 2b peut être emboîté au moins partiellement dans le premier chariot 1a.

Dans un cas préférentiel, la structure de suspension 30 comprend au moins un premier bras 11 et un deuxième bras 12 s'étendant respectivement selon une première direction et une deuxième direction, la première direction et la deuxième direction étant concourantes, et de part et d'autre dudit chariot 1. L'un parmi le premier bras 11 et le deuxième bras 12 comprend alors avantageusement le dispositif de mesure 50.

De manière avantageuse, le premier bras 11 et le deuxième bras 12 sont conformés de sorte à présenter chacun au moins deux portions horizontales 13 et au moins une portion verticale 14 séparant les deux portions horizontales 13, de sorte à former une structure en escalier par exemple et ainsi à permettre l'emboîtement dudit chariot 1 en partie au moins avec au moins un autre chariot ayant une structure de suspension identique en imbriquant la structure de suspension 30a dudit premier chariot 1a avec la structure de suspension 30b dudit au moins un deuxième chariot 1b, de préférence en imbriquant le premier 11a et le deuxième bras 12a dudit chariot 1a respectivement avec le premier 11b et le deuxième bras 12b dudit au moins un autre chariot 2b. De préférence, les portions verticales 14 sont destinées à supporter en partie au moins l'au moins un contenant 90 et l'au moins un produit. L'au moins un dispositif de mesure 50 est alors porté par au moins une portion horizontale 13.

Selon ce mode de réalisation, la distance d'emboîtement correspond à la longueur de la plus courte portion horizontale 13 du premier bras 11 et deuxième bras 12 confondus.

Ainsi l'utilisateur peut facilement imbriquer le chariot 1 avec un autre chariot 1. Ce mode d'emboîtement permet d'atteindre des distances d'emboîtements de l'ordre de 23% de la longueur d'un chariot 1. Ainsi au moins 23% de la longueur d'un chariot se trouve insérée dans un autre chariot. A titre d'exemple non limitatif, la distance d'emboîtement est de l'ordre de 300 mm. Cela permet alors un gain de place considérable pour le stockage de chariots lors de son inutilisation. On augmente ainsi le nombre de chariots emboîtables dans un espace défini. Ainsi le chariot 1 tel que le décrit l'invention, n'est pas encombrant. Par conséquent, la présence de la structure de suspension 30 ne perturbe pas la capacité dudit chariot 1 à être emboîté.

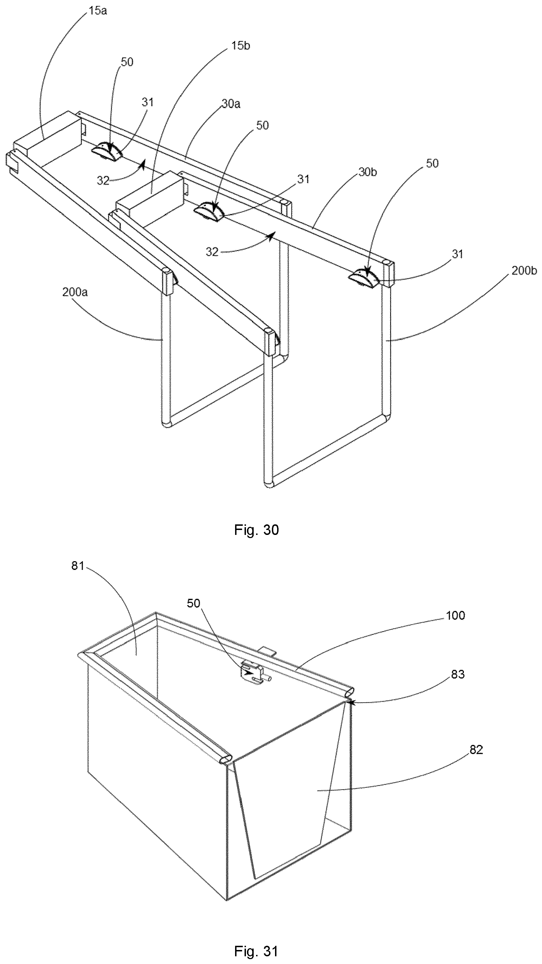

Selon un mode de réalisation illustré en figure 21 par exemple, le chariot 1 comprend au moins un cadre 100 porté par le châssis 10. Le cadre 100 est représenté sur la figure 31 par exemple. Le chariot 1 est configuré de sorte à ce que lorsqu'une force appliquée par un utilisateur sur le cadre 100 présente une composante verticale, cette composante verticale est transmise du cadre 100 au châssis 10 puis au sol sans être transmise à la structure porteuse 200 et à la structure de suspension 30. Cela permet qu'aucun élément extérieur ne vienne perturber la mesure réalisée par le dispositif de mesure 50 du paramètre relatif au poids de l'au moins un contenant 90 et de l'au moins un produit. Par « élément extérieur », on entend par exemple l'appui d'une personne sur la structure de suspension 30 du chariot 1.

Ainsi, la présence du cadre 100 permet à l'utilisateur ou une autre personne de s'appuyer sur ledit cadre 100 sans venir perturber la mesure réalisée par le dispositif de mesure 50.

De manière très avantageuse, le cadre 100 est configuré pour définir une enveloppe renfermant un volume interne. De manière préférée, les zones d'accueil 31 de la structure de suspension 30 se situent au sein dudit volume interne. Ainsi la structure de suspension 30 n'est avantageusement pas accessible pour l'appui d'une personne. On évite alors tous risques de perturbations de la mesure du paramètre relatif au poids. Le système de mesure est alors doté d'une grande précision et d'une grande fiabilité.

La structure porteuse 200 se situe aussi à l'intérieur du volume interne. A cet effet, la structure porteuse 200 n'est pas facilement accessible pour l'appui de l'utilisateur ou d'une autre personne sur celle-ci.

Selon un exemple alternatif non représenté par les figures, le premier bras 11 et le deuxième bras 12 sont incurvés de sorte à permettre l'imbrication des premier et deuxième bras 11b, 12b d'un second chariot 1b dans les premier et deuxième bras 11a, 12a du premier chariot 1a.

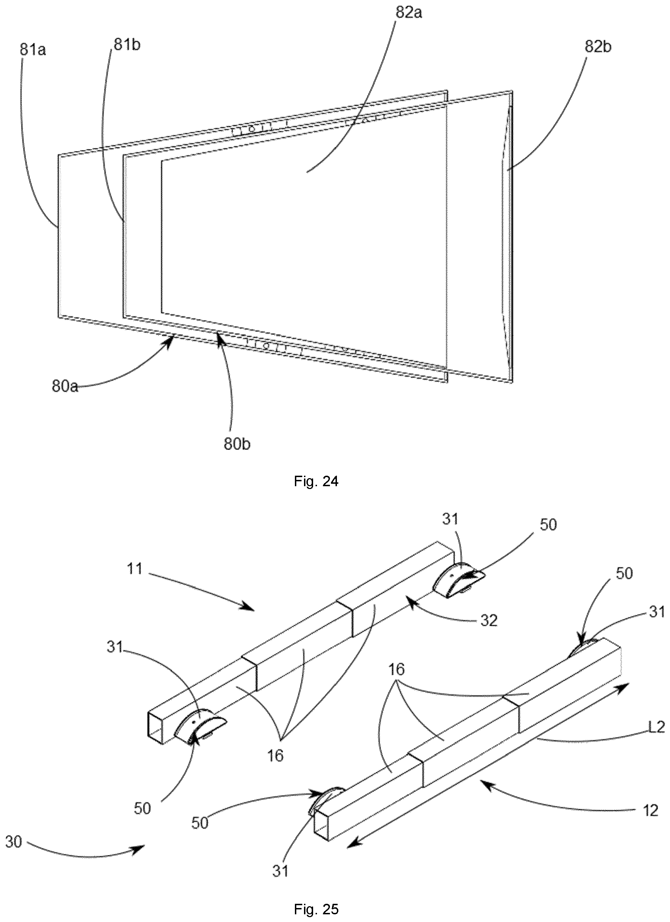

Nous allons à présent décrire un autre mode de réalisation de la présente invention au travers des figures 25 à 27. Comme représenté sur la figure 25, la structure de suspension 30 est configurée de sorte à autoriser la variation de ladite longueur L2. En effet, il est possible de faire varier la longueur L2 afin d'adapter le chariot 1 à la quantité de courses réalisées par l'utilisateur. La longueur L2 de la structure de suspension 30 peut être réglée par l'utilisateur avant le début des courses. L'utilisateur peut aussi changer la longueur L2 de la structure de suspension 30 lorsque l'au moins un contenant 90 est déjà suspendu. La structure de suspension 30 peut alors être réduite d'au moins 70% de sa longueur L2 initiale. Cela facilite ainsi le stockage des chariots et cela permet d'emboîter un plus grand nombre de chariots dans un espace limité.

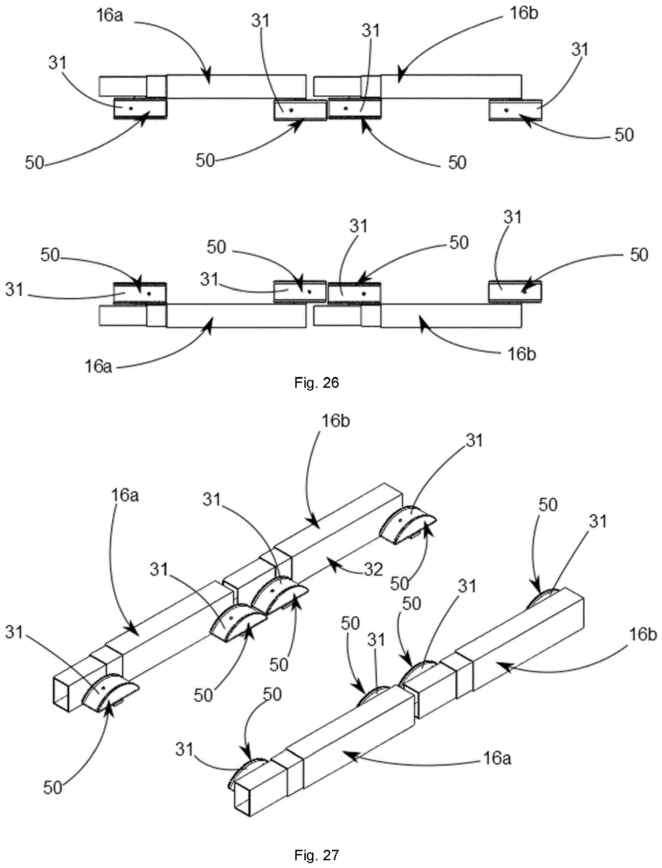

De manière préférée, le premier bras 11 et le deuxième bras 12 comprennent des portions télescopiques 16, lesquelles sont configurées chacune pour présenter une configuration déployée et une configuration repliée. La figure 25 montre la configuration déployée dans laquelle lesdits premier 11 et deuxième 12 bras sont configurés pour supporter en partie au moins l'au moins un contenant 90 suspendu à la structure de suspension 30. Lesdits premier 11 et deuxième 12 bras soutiennent en particulier l'au moins un contenant 90 par les zones d'accueil 31 disposées sur la face latérale 32 de la structure de suspension 30. Les figures 26 et 27 montrent la configuration repliée des portions télescopiques 16, dans laquelle le premier chariot 1a est apte à être emboîté avec au moins un deuxième chariot 1b ayant une structure de suspension 30b identique. La portion télescopique 16a d'un premier chariot 1a coopère avec la portion télescopique 16b d'un deuxième chariot 1b de sorte à ce que au moins une zone d'accueil 31 portant le dispositif de mesure 50 respectif de chaque portion télescopique 16a, 16b viennent en contact l'une de l'autre. Cela permet d'augmenter l'emboitabilité d'un premier chariot 1a avec un second chariot 1b et ainsi augmenter l'emboitabilité d'une série de chariots. Le stockage de chariots prend alors moins de place.

Dans ce mode de réalisation, la structure de suspension 30 présente au moins une face latérale 32 de sorte à ce que les zones d'accueil 31 de la structure de suspension 30 sont situées sur l'au moins une face latérale 32.Les zones d'accueil 31 peuvent être des poignées, de préférence en demi-lune, ou n'importe quelle surface de butée permettant à l'utilisateur d'accrocher par exemple des anses ou des poignées de l'au moins un contenant 90. De manière alternative, les zones d'accueils 31 sont des crochets, accrochés directement à la structure de suspension 30. Le capteur de force 51 peut être un capteur de type bouton directement intégré sur les zones d'accueil 31. Cela permet d'éviter la pesée de la structure de suspension 30 et cela permet de peser directement l'au moins un contenant 90 et l'au moins un produit.

Selon un mode de réalisation non illustré, la barre de suspension 34 peut optionnellement présenter une portion télescopique 16.

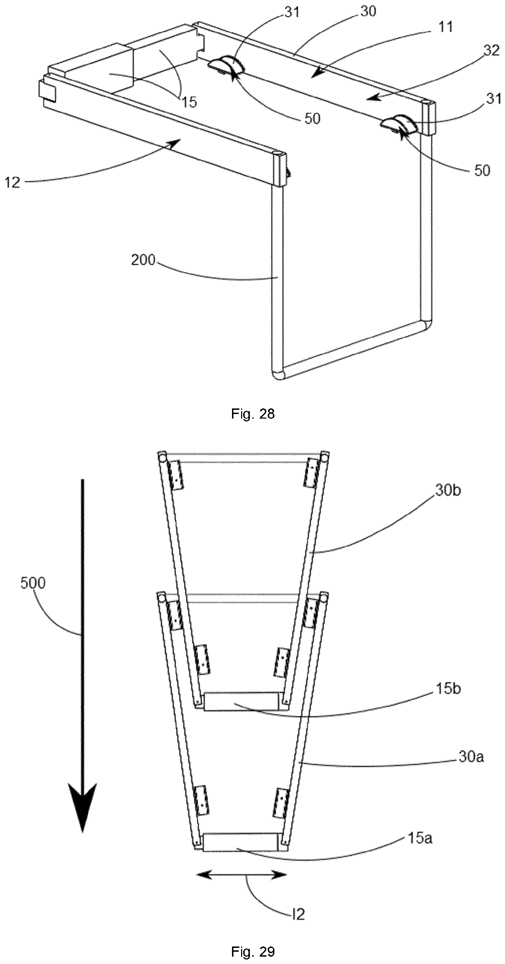

Nous allons à présent décrire un autre mode de réalisation de la présente invention au travers des figures 28 à 30. Selon ce mode de réalisation, la structure de suspension 30 est maintenue sur la structure porteuse 200 à l'arrière du chariot 1. De plus, la structure de suspension 30 présente au moins une extrémité libre à l'avant du chariot 1.

Avantageusement, la largeur I2 de la structure de suspension 30 est conformée pour diminuer le long d'une direction correspondant à la direction d'emboîtement 500 dudit chariot 1 dans un autre chariot de sorte à autoriser l'imbrication au moins partiellement du chariot 1 dans un autre chariot ayant une structure de suspension identique.

Selon un mode de réalisation préféré, le premier bras 11 et le deuxième bras 12 de la structure de suspension 30 sont maintenus à la structure porteuse 200 au niveau de la partie arrière du chariot 1. De plus, le premier bras 11 et le deuxième bras 12 sont solidaires l'un de l'autre au moyen d'au moins une portion télescopique de solidarisation 15. Les premier 11 et deuxième 12 bras sont avantageusement solidaires l'un de l'autre au niveau de leurs extrémités libres, lesquelles sont situées à l'avant du chariot 1. La portion télescopique de solidarisation 15 est configurée pour présenter une configuration déployée et une configuration repliée.

La figure 28 montre la configuration déployée, dans laquelle le premier bras 11 et le deuxième bras 12 sont dans une position éloignée l'un de l'autre. En configuration déployée, le premier bras 11 et le deuxième bras 12 sont de préférence parallèles entre eux et la portion télescopique de solidarisation 15 est configurée dans sa longueur maximale. Lesdits premier 11 et deuxième 12 bras soutiennent en particulier l'au moins un contenant 90 par les zones d'accueils 31 disposées sur la face latérale 32 de la structure de suspension 30.

Les figures 29 et 30 montrent la configuration repliée, dans laquelle le premier bras 11 et le deuxième bras 12 sont dans une position rapprochée l'un de l'autre. Selon un mode plus qu'avantageux, en configuration repliée le premier bras 11 et le deuxième bras 12 sont concourants l'un par rapport à l'autre. En effet, les premier 11 et deuxième 12 bras, étant maintenus à la structure porteuse 200 à l'arrière du chariot 1, lorsque la portion télescopique de solidarisation 15 est repliée, les premier 11 et deuxième 12 bras se rapprochent l'un de l'autre à l'avant du chariot 1 de sorte à devenir concourants l'un par rapport à l'autre. Cela permet que la structure de suspension 30a du premier chariot 1a soit apte à être emboîté avec au moins un deuxième chariot 2a ayant une structure de suspension 30b identique. Pour cela, la portion télescopique de solidarisation 15a du premier chariot 1a et la portion télescopique de solidarisation 15b du second chariot 1b sont de préférence chacune en configuration repliée.

Ainsi les premier 11 et deuxième 12 bras du deuxième chariot 1b sont aptes à être insérés dans les premier 11 et deuxième 12 bras du premier chariot 1a.

De plus, il peut exister une infinité de positions intermédiaires entre la configuration déployée et la configuration repliée de la portion télescopique de solidarisation 15.

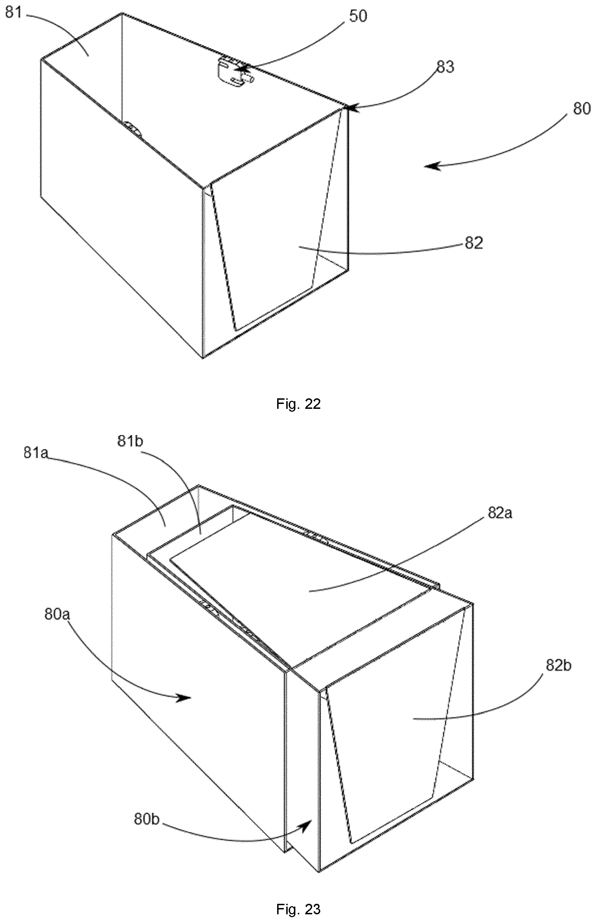

Selon un autre mode de réalisation et tel que représenté sur la figure 22, le chariot 1 comprend au moins un réceptacle 80 destiné à recevoir au moins un produit. Le réceptacle 80 est avantageusement supporté par le châssis 10. Le paramètre relatif au poids du réceptacle 80 et de l'au moins produit qu'il contient est mesuré par le dispositif de mesure 50.

De manière plus qu'avantageuse et tel que représenté sur les figures 22 à 24, le réceptacle 80 présente au moins une paroi latérale 81 ou 82 configurée pour être mobile en rotation autour d'un axe de rotation 83. L'axe de rotation 83 est de préférence horizontal, de sorte à ce que la paroi 81 ou 82 puisse passer d'une configuration dans laquelle la paroi 81 ou 82 forme un contenant avec les autres parois du réceptacle 40 à une position dans laquelle ledit chariot 1 est emboîté au moins partiellement avec au moins un autre chariot ayant un réceptacle identique. Selon un exemple d'emboîtement du premier chariot 1a avec un deuxième chariot 1b, le réceptacle 80b du deuxième chariot 1b est inséré dans le réceptacle 80a du premier chariot 1a de la manière suivante : la paroi latérale 81b du deuxième chariot 2b pousse la paroi latérale 82a du premier chariot 1a de sorte à générer la rotation de la paroi latérale 82a autour de l'axe de rotation 83. Le réceptacle 80b pénètre ainsi le réceptacle 80a jusqu'à ce que la paroi latérale 81b soit au contact de la paroi latérale 81a.

Selon un mode de réalisation illustré en figure 32 par exemple, le chariot 1 comprend l'au moins un cadre 100 porté par le châssis 10. Le cadre 100 épouse avantageusement au moins une partie du contour du réceptacle 80.

Ainsi, tel que décrit précédemment, la présence du cadre 100 permet à l'utilisateur ou une autre personne de s'appuyer sur ledit cadre 100 sans venir perturber la mesure réalisée par le dispositif de mesure 50.

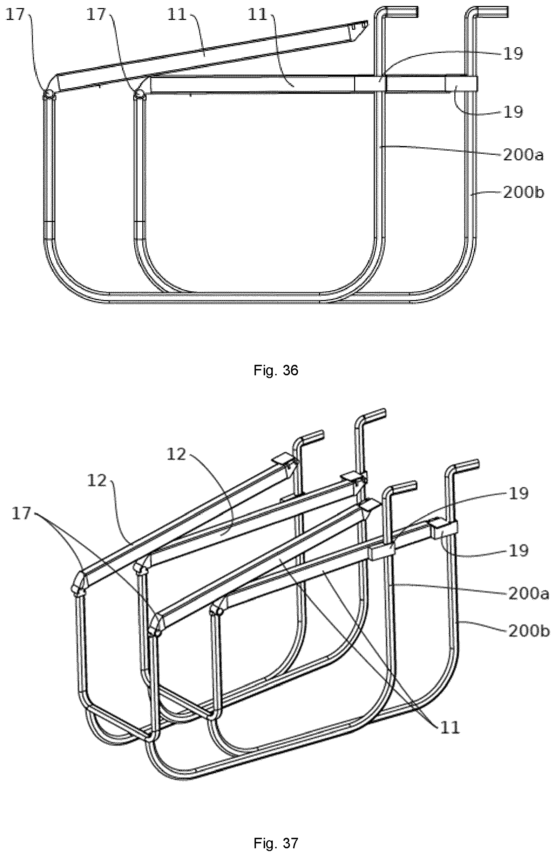

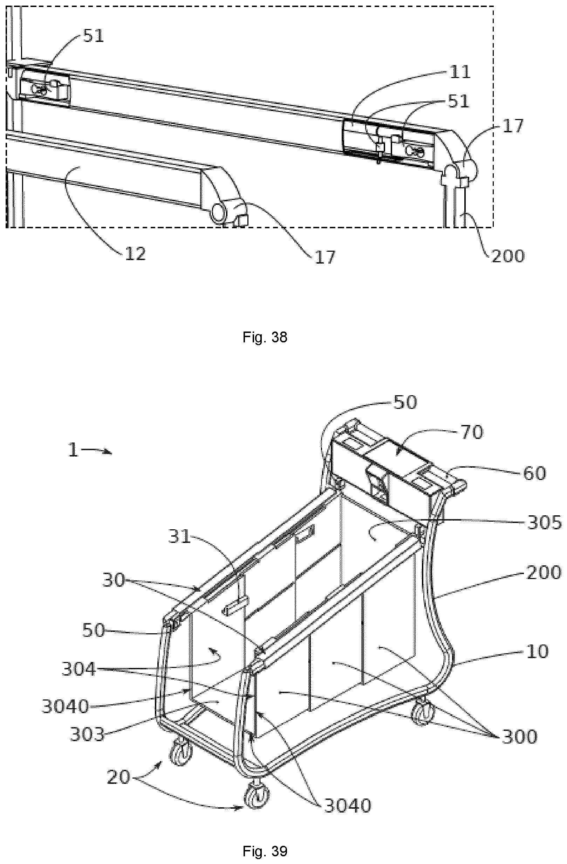

Selon un autre mode de réalisation illustré aux figures 35 à 38, le premier et le deuxième bras 11, 12 de la structure de suspension 30 sont articulés en rotation sur la structure porteuse 200, autour d'un axe sensiblement horizontal. Le premier et deuxième bras 11, 12 sont avantageusement inclinables vers le haut. Cette rotation peut s'effectuer par le biais de la charnière 17 effectuant une liaison pivot selon un axe sensiblement horizontal. La charnière 17 est portée avantageusement sur la partie avant du chariot 1. En configuration de portage tel qu'illustré sur la figure 35, le premier bras et le deuxième bras 11, 12 sont chacun au contact d'au moins une butée 19, portée par la structure porteuse 200 empêchant une rotation de la structure de suspension 30 sous l'effet de la gravité. La configuration de stockage tel qu'illustré sur les figures 36 et 37 autorise l'emboîtement au moins partiellement dudit premier chariot 1 avec un autre chariot 1 ayant une structure de suspension identique dans la position de stockage, la structure de suspension 30 étant à distance de la butée 19. De plus, il est illustré sur la figure 38 que le capteur de force 51 peut être au contact d'au moins un crochet, lequel sert à la suspension desdits contenants 90. Le capteur de force 51 peut par exemple être de type « bouton intégré ». Ainsi l'utilisateur peut directement suspendre les contenants 90 sur l'au moins un crochet, destiné à cet usage. De plus, le premier 11 et deuxième 12 bras peuvent comprendre avantageusement au moins un capteur de force 51 de type porte-à-faux.

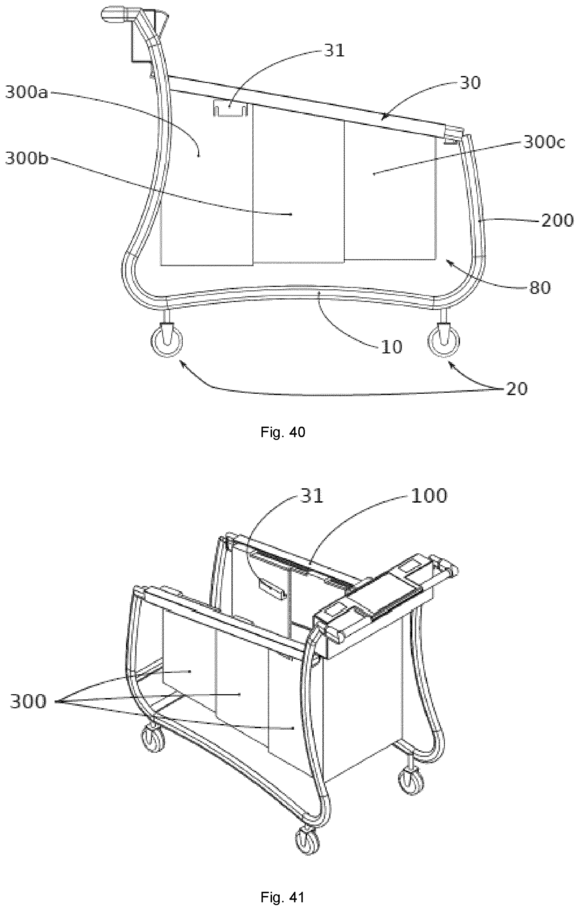

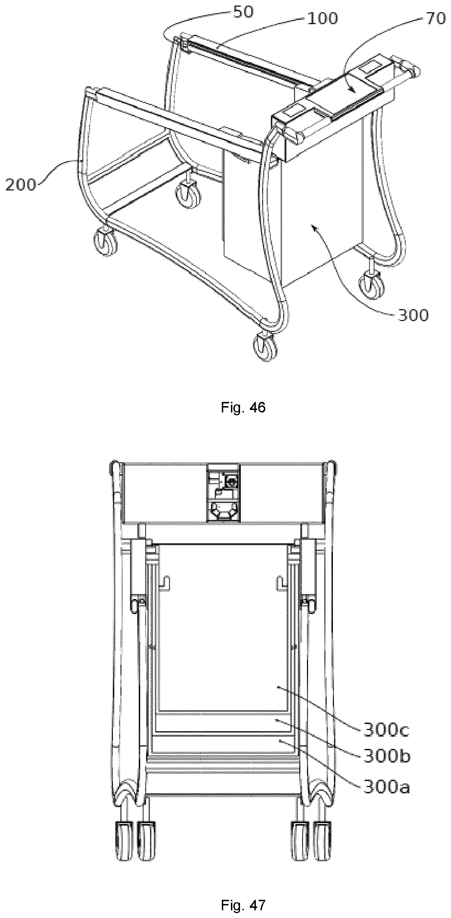

Selon un autre mode de réalisation non illustré sur les figures, le dispositif roulant 20 peut comprendre un dispositif de mesure d'au moins un paramètre relatif au poids de l'au moins un contenant. Cela permet de peser directement l'intégralité du chariot, ainsi que les contenants. Nous allons à présent décrire un autre mode de réalisation de la présente invention, tel qu'il est illustré sur les figures 39 à 55. La structure de suspension 30 comprend au moins deux contenant 300, de préférence trois contenants 300 tels qu'ils sont représentés sur les figures 39 à 44. Par la suite de la description, les contenants peuvent également être désignés bacs ou contenants.

Toutes les caractéristiques et tous les effets techniques décrits dans les modes de relation précédents sont combinables avec le mode de réalisation qui suit et qui est illustré en figures 39 à 55.

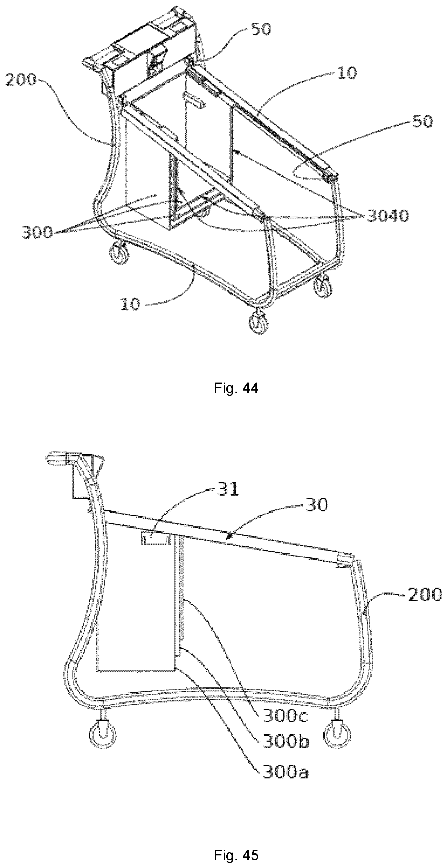

Avantageusement, au moins deux contenants formant des bacs ou des caissons adjacents sont emboîtables au moins en partie. Les contenants sont suspendus. On peut ainsi dire qu'ils sont configurés pour être télescopiques ou pour coulisser l'un dans l'autre tels des poupées russes. Ainsi, dans une configuration rétractée, les contenants sont au moins deux à deux partiellement emboîtés. Une portion au moins d'un premier contenant est alors logée dans un deuxième contenant qui lui est adjacent. De préférence, le deuxième contenant est situé plus près de l'arrière du chariot que le premier contenant. Comme dans l'exemple illustré en figure 44, on peut prévoir qu'un même contenant loge en partie ou entièrement plus d'un autre contenant. Sur cet exemple, le contenant 300a loge entièrement les contenants 300b et 300c.

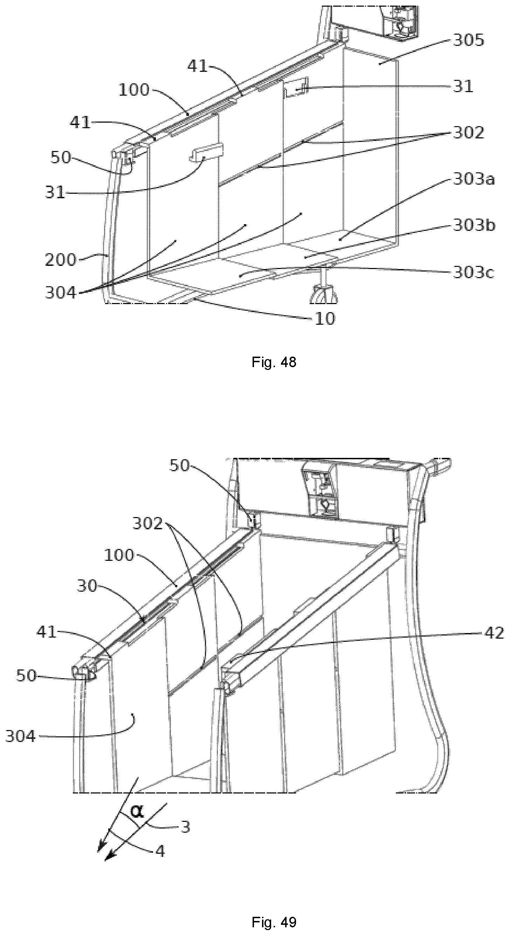

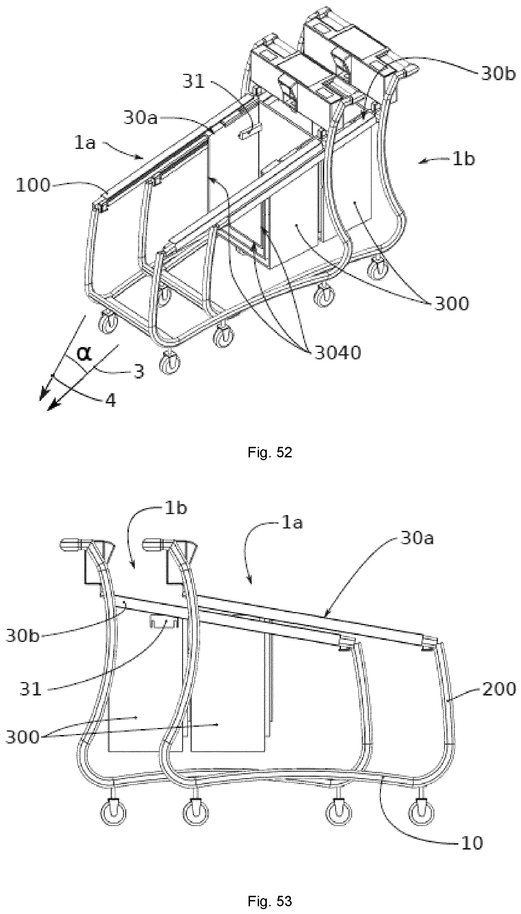

De manière avantageuse, l'emboîtement d'un premier chariot dans un deuxième chariot provoque le déplacement des contenants 300 du deuxième chariot et leur emboîtement au moins deux à deux. De préférence, ce déplacement est un coulissement. La direction 4 de coulissement et la direction d'avancée 3 normale du chariot sont contenues dans un même plan. La direction d'avancée 3 normale du chariot étend la direction d'avancée lorsque l'utilisateur pousse le chariot vers l'avant sans faire de virage. Cette direction 3 est référencée en figures 49 et 52.

De manière plus générale, au moins l'un des contenants est monté coulissant dans le chariot et relativement à au moins un autre contenant.

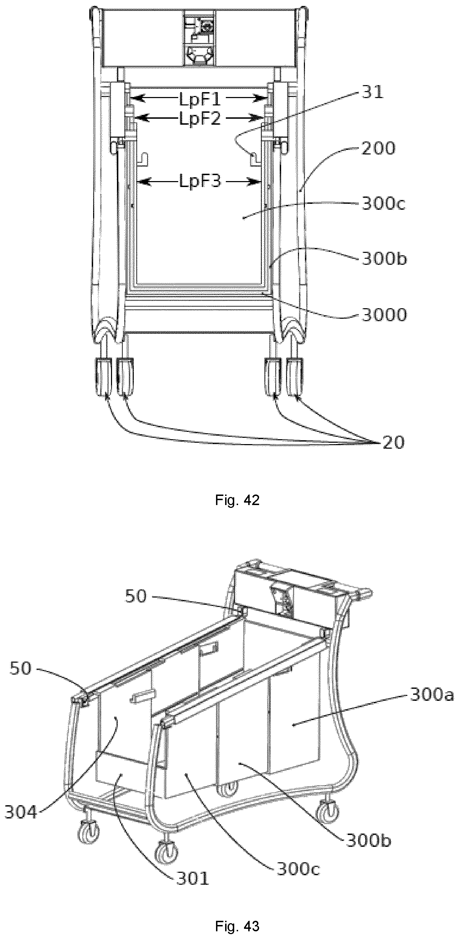

Chaque contenant 300 est formé d'une paroi de fond 303 et d'au moins de deux parois latérales 304. La paroi de fond 303 présente une dimension en longueur Lpf, laquelle correspond à la distance séparant les deux parois latérales 304 de chaque contenant 300. Les dimensions Lpf1-Lpf3 de chaque contenant sont illustrées en figure 42. Les deux parois latérales 304 peuvent être perpendiculaires à la paroi de fond 303 et, s'opposent l'une à l'autre. De manière plus générale, les deux parois latérales 304 s'étendent depuis la paroi de fond 303 et définissent avec cette dernière une forme de « U » dont les branches forment un angle droit ou un angle supérieur 90° avec la paroi de fond 303.

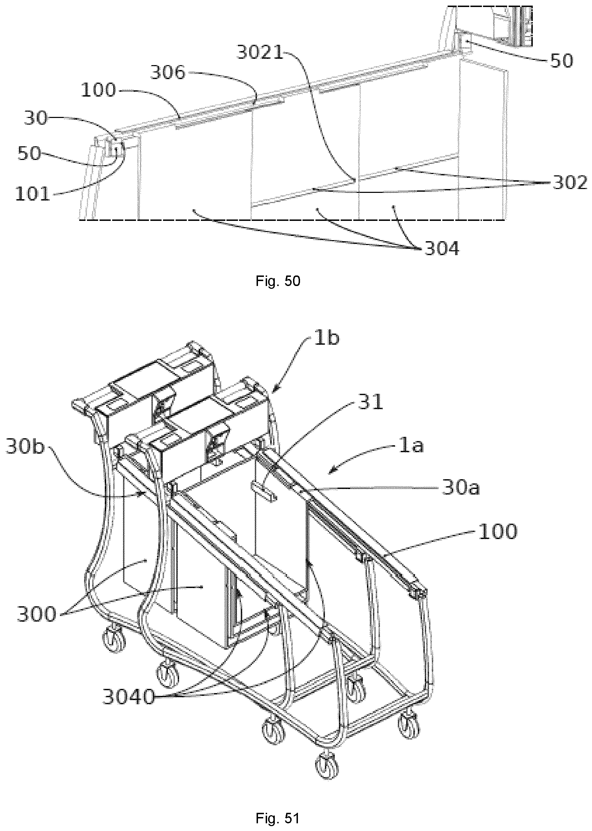

Par « paroi », on entend une face comprise dans un seul plan. Chaque contenant 300 reste ouvert et présente au moins une surface ouverte, perpendiculaire aux parois latérales 304. Les parois latérales 304 présentent des arêtes 3040. Par exemple trois arêtes parmi les arrêtes 3040, forment un U et délimitent l'au moins une surface ouverte. De manière préférée, chaque contenant 300 présente au moins deux surfaces ouvertes, opposées l'une à l'autre de sorte à ce que chaque contenant 300 se présente sous forme de U. Selon un exemple très avantageux, le contenant arrière 300a, c'est-à-dire celui positionné le plus à l'arrière du chariot 1, présente un fond. Ce fond définit une troisième paroi latérale 305 connectant les deux autres parois latérales 304 et laissant alors une seule surface ouverte au contenant arrière 300a. Selon un exemple alternatif, chaque contenant 300 présente une troisième paroi latérale 305. Les figures 48 à 50 illustrent en détail la suspension des contenants 300 à la structure de suspension 30. Les contenants 300 sont entièrement suspendus à la structure de suspension 30, avantageusement par au moins un rebord 41 ou 42 formant chacune une zone d'accueil, de préférence par au moins deux rebords 41,42, avantageusement opposé l'un à l'autre. Les rebords 41, 42 ne sont pas fixés à la structure de suspension 30, mais forment une liaison glissière avec la structure de suspension 30. Ainsi, chaque rebord 41, 42 forme une zone d'accueil configurée pour soutenir ou suspendre entièrement un contenant 300a-300c. Par exemple, chaque rebord 41, 42 forme un coulisseau qui coopère en coulissement avec un rail 306 de la structure de suspension 30 pour guider et supporter le contenant dans sa translation par rapport au chariot. Le rail 306 est clairement identifiable en figures 50. De cette manière, les contenants 300 peuvent translater le long de la structure de suspension 30. En particulier les contenants 300 translatent selon un axe correspondant à la direction 4 d'emboîtement 500 du chariot 1.

Comme cela sera précisé par la suite, le rail 306 est solidaire ou coopère avec au moins un dispositif de mesure 50 de sorte à ce que le poids des contenants et des articles disposés dans les contenants soient transférés au rail 306 et soit captée par le dispositif de mesure 50.

De préférence, la structure de suspension 30 comprend au moins deux rails 306, les rails 3 étant disposés de manière parallèle est porté par chaque côté du chariot.

Les trois contenants 300 sont avantageusement disposés selon la manière suivante: ils sont alignés selon la direction 4 d'emboîtement 500 du chariot 1. Le contenant arrière 300a présente la plus grande surface ouverte, c'est-à-dire la paroi de fond 303a du contenant arrière 300a présente la plus grande dimension en longueur Lpfa. Le contenant avant 300c, c'est-à-dire, celui positionné le plus à l'avant du chariot 1 présente la plus petite surface ouverte, c'est-à-dire la paroi de fond 303c du contenant avant 300c présente la plus petite dimension en longueur Lpfc. Enfin, le contenant intermédiaire 300b, c'est-à-dire celui positionné entre le contenant avant 300c et le contenant arrière 300a, présente une surface ouverte comprise entre la surface ouverte du contenant avant 300c et la surface ouverte du contenant arrière 300a, c'est-à-dire la paroi de fond 303b du contenant intermédiaire 300b présente une dimension en longueur Lpfb comprise entre Lpfa et Lpfc. Cela permet d'autoriser l'emboîtement du contenant intermédiaire 300b dans le contenant arrière 300a, et du contenant avant 300c dans le contenant intermédiaire 300b tel qu'il est illustré sur les figures 45 à 47, les contenants 300 sont alors en configuration dite configuration de compression. On appellera « contenant emboîtant », chaque contenant 300 situé dans un autre contenant 300 et « contenant emboîté », chaque contenant 300 contenant un autre contenant 300.

De manière particulièrement avantageuse, la direction 4 de coulissement des contenants et inclinés par rapport à l'horizontale. Ainsi, direction 4 de coulissement des contenants et l'horizontale, soit la direction d'avancée 3 du chariot sur un seul plat définissent ensemble un angle alpha. Cet angle est illustré en figures 49 et 50. Cette direction 4 est inclinée vers l'avant. L'extrémité du rail 306 la plus proche de l'avant du chariot est plus proche du sol que l'extrémité du rail la plus proche l'arrière du chariot. Cette inclinaison, ainsi que la structure porteuse 30 sont configurés de sorte à ce que les contenants 300 coulissent vers l'avant du chariot sous l'effet de la gravité. Ainsi, lorsque les contenants sont vides ou supportent des articles, leur poids les entraîne vers l'avant du chariot et provoque leur déploiement, c'est-à-dire lors écartement mutuel.

Chaque paroi latérale 304, 305 et paroi de fond 303 de chaque contenant 300 présente une surface interne et une surface externe. Selon un mode plus qu'avantageux, il existe un espacement entre la surface externe des parois latérales 304 du contenant emboîtant et la surface interne des parois latérales 304 du contenant emboîté. Cet espacement peut être compris entre 0 et 50 mm. De la même façon, il existe un espacement entre la surface externe de la paroi de fond 303 du contenant emboîtant et la surface interne de la paroi de fond 303 du contenant emboîté. Cet espacement peut être compris entre 0 et 50 mm.

De plus, les figures 49 et 50 montrent le positionnement du dispositif de mesure 50 lequel est porté par la structure de suspension 30 de la même façon que pour le mode de réalisation représenté à la figure 19.

De plus, selon un mode optionnel, mais préféré, on notera qu'au moins un contenant et de préférence le contenant intermédiaire 300b et le contenant arrière 300a présentent chacun au moins un rail 302 de guidage, de préférence deux rails. Chaque rail 302 a pour rôle de faciliter le guidage du contenant emboîtant dans le contenant emboîté. Il sert aussi à stabiliser la configuration des contenants 300. Les rails sont de préférence disposés sur la surface interne des parois latérales 304 des contenants 300, de préférence à mi-hauteur des contenants 300. De manière plus générale, c'est le contenant emboîté qui présente le rail 302. Le rail 302 est dirigé selon la direction 4 d'emboîtement 500 des contenants 300. Un autre avantage conféré au rail 302 est de permettre une meilleure répartition du poids. En effet, à titre d'exemple non limitatif, le rail 302 porté par le contenant intermédiaire 300b se translate sur le rail 302 porté par le contenant arrière 300a. Ainsi, le rail 302 porté par le contenant intermédiaire 300b exerce un appui sur le rail 302 porté par le contenant arrière 300a. Le rail 302 porté par le contenant arrière 300a soutient alors au moins une partie du poids soutenu par le contenant intermédiaire 300b. Le poids est alors mieux réparti entre le contenant intermédiaire 300b et le contenant arrière 300a. Cela facilite alors la manipulation du chariot 1 lorsque l'utilisateur réalise ses courses.

De manière également avantageuse, ces rails 302 ou glissières présentent à au moins l'une de leur extrémité une butée 3021. Cette butée est par exemple formée par l'extrémité d'une rainure ou d'une fente qui définit le rail 302 et qui est formée dans la face interne du contenant. Lorsque qu'un coulisseau du contenant qui coopère avec le contenant portant le rail 302 parvient au niveau de la butée 3021, alors le coulisseau est stoppé et le contenant est bloqué. Cela permet de manière particulièrement simple de guider en translation les contenants ensemble et de contrôler leur longueur de course.

Ainsi, sous l'effet de la gravité les contenants ont tendance à translater vers l'avant du chariot. Leur translation est interrompue lorsqu'un contenant parvient en butée sur le contenant qui lui est adjacents. L'un des contenants poursuit donc sa course tandis que l'autre contenant est stoppé dans sa translation. Cela permet le déploiement des contenants sous l'effet la gravité. Ce mode de réalisation présente pour avantage de ne nécessiter aucune action de la part de l'utilisateur ni aucun actionneur pour déployer les contenants. Le chariot selon ce mode de réalisation et donc particulièrement simple d'utilisation, fiable et robuste.

Comme cela sera décrit en détail par la suite, afin de rétracter les contenants, c'est-à-dire de les emboîter au moins partiellement les uns dans les autres, il suffit que l'utilisateur emboîte au moins partiellement un premier chariot dans un deuxième chariot. Une butée portée par le deuxième chariot entre au contact du contenant situé le plus en avant du premier chariot et provoque alors le coulissement de ce contenant avant, le long du rail 306 (c'est-à-dire selon la direction 4 de coulissement) et en direction de l'arrière du premier chariot. Ce contenant avant se déplace jusqu'à entrer au contact du contenant qui lui est adjacent et entraîne ce dernier à son tour en coulissement en direction de l'arrière du premier chariot. La rétractation des contenants se fait ainsi de manière télescopique. Comme on le verra par la suite, cette butée portée par le deuxième chariot peut-être une paroi de fond du contenant du deuxième chariot situé le plus en arrière. Alternativement, cette butée peut être portée par un autre élément du deuxième chariot. Selon un mode de réalisation particulièrement avantageux, le contenant disposé le plus en arrière est configuré pour se déplacer vers l'arrière du chariot lorsqu'un effort lui est appliqué typiquement, lorsque le chariot est emboîté dans un autre chariot. Lorsque l'effort cesse d'être appliqué sur ce contenant, ce contenant revient dans sa position de repos par simple gravité. Ce déplacement vers l'arrière présente une course de préférence comprise entre 5 et 30 centimètres. Il permet d'améliorer encore le taux d'emboîtement de deux chariots l'un dans l'autre.

Le mode de réalisation décrit par les figures 39 à 55 présente alors deux configurations possibles pour les contenants 300 : une configuration dite configuration de déploiement illustrée aux figures 39 à 44 et une configuration dite configuration de rétractation illustrée aux figures 45 à 47.

La configuration de déploiement est celle que l'utilisateur va favoriser lorsqu'il réalise ses courses. En effet, c'est la configuration qui permet de disposer d'un grand volume pour disposer la totalité des contenants 90 additionnel tel qu'un sac ou sachet. L'au moins un contenant 90 additionnel peut être suspendu par les zones d'accueils 31 se trouvant sur la surface interne des parois latérales 304 des contenants 300. Cependant, une autre option possible pour l'utilisateur est de directement poser l'au moins un contenant 90 additionnel ou directement le produit sur la paroi de fond 305 c'est-à-dire la paroi de fond du contenant arrière 300a du premier chariot 1a. Pour disposer l'au moins un contenant 90 additionnel dans les contenants 300, l'invention a l'avantage de proposer une ouverture sur le contenant avant 300c, ouverture qui correspond à la surface ouverte décrite précédemment. Cela permet à l'utilisateur de faire passer l'au moins un contenant 90 additionnel ou le produit directement par cette ouverture sans avoir besoin de soulever l'au moins un contenant 90 additionnel ou le produit d'une hauteur égale à la hauteur de la structure de suspension 30. L'utilisateur n'a alors pas besoin de soulever l'au moins un contenant 90 additionnel de sa hauteur pour le retirer du chariot 1 ou le placer dans le chariot 1. Ainsi, on évite à l'utilisateur d'exercer un effort physique trop important qui pourrait le fatiguer, voir le blesser. Dans cette configuration, ce sont les contenants 300 qui forment le réceptacle 80 décrit précédemment et représenté à la figure 22.

Optionnellement, le contenant avant 300c présente une butée avant 301 tel que représenté sur la figure 44. Cela permet de retenir l'au moins un contenant 90 additionnel ou les produits disposés sur la paroi de fond 303 au sein du volume interne. En effet, si l'utilisateur est amené à disposer des produits roulants ou alors est amené à pousser le chariot 1 sur des sols inclinés, il est très avantageux de pouvoir retenir l'au moins un contenant 90 additionnel et/ou les produits et d'ainsi de les empêcher de s'échapper du chariot et de se dédommager.

De manière avantageuse, lors de l'emboîtement d'un premier chariot dans un deuxième chariot, la butée avant 301 du premier chariot ou son arrête lorsqu'il n'y a pas de butée 301 entre au contact de la paroi de fond 305 du deuxième chariot. Cette paroi de fond 305 fait office de butée pour stopper le déplacement de la butée 301 et du contenant 300c. Lorsque l'emboîtement du premier chariot dans le deuxième chariot se poursuit cette mise en butée entraîne le coulissement relatif des contenants du premier chariot et leur l'emboîtement télescopique ou en poupées russes. Cela est représenté en figures 51 à 54 par exemple. Sur ces figures, les contenants du deuxième chariot sont représentés emboîtés les uns dans les autres pour bien faire comprendre ce mode de réalisation. Naturellement, cette configuration de contenants sera possible si le deuxième chariot est lui-même emboîté dans troisième chariot (ou si l'utilisateur repousse les contenants en direction de l'arrière du chariot ce qui n'est pas un cas normal d'utilisation du chariot).

Ce mode de réalisation de rétractation ou d'emboîtement des chariots est particulièrement simple puisqu'il se fait automatiquement lorsque l'utilisateur emboîte un chariot dans un autre chariot. Par ailleurs ce mode de réalisation ne nécessite aucun actionneur. Il est donc particulièrement simple d'utilisation et robuste.

Selon un exemple non limitatif, La butée avant 301 est parallèle à la troisième paroi latérale 305 du contenant arrière 300a. Selon un exemple non limitatif, elle s'étend perpendiculairement aux deux parois latérales 304 du contenant avant 300c et connecte les deux parois latérales 304 du contenant avant 300c. La butée 301 présente une dimension en hauteur inférieure à la moitié de la dimension en hauteur du contenant avant 300c.

La configuration de rétractation est celle que l'utilisateur va favoriser pour le stockage du chariot 1. En effet, tel qu'il est illustré sur les figures 51 à 55, lorsque le contenant avant 300c et le contenant intermédiaire 300b sont emboîtés dans le contenant arrière 300a, l'ensemble des contenants 300 occupe un volume sensiblement trois fois moins grand que lorsque le chariot 1 est en configuration de déploiement. Cela permet un gain de place considérable lors du stockage du chariot 1. En considérant alors des chariots de dimensions standards de l'ordre de grandeur 1300 mm × 650 mm, il est possible d'emboîter 36 chariots sur 3 files d'emboîtements séparées, soit 12 chariots par files dans des dimensions standards d'une place de parking.

On y voit sur la figure 53 que l'emboîtement du deuxième chariot 1b dans le premier chariot 1a est possible jusqu'à ce que la troisième paroi latérale 305 du contenant arrière 300a du premier chariot 1a est au contact de la surface ouverte formée par le contenant arrière 300a du deuxième chariot 1b, l'emboîtement est alors arrêté par les trois arêtes 3040 que présentent les parois latérales 304 opposées du contenant arrière 300a du deuxième chariot 1b.

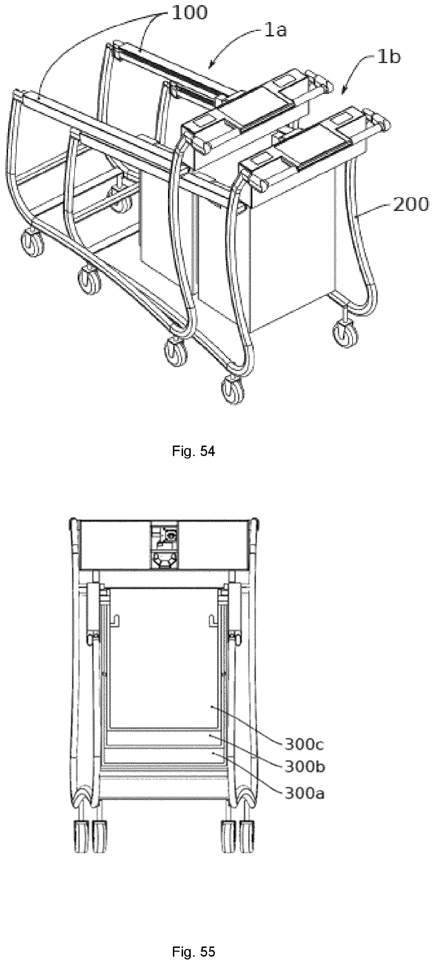

De plus, on remarquera sur les figures 53 et 54 que dans ce mode de réalisation, la structure de suspension 30 présente aussi une dimension en hauteur H qui diminue le long d'une direction correspondant à la direction d'emboîtement 500 du deuxième chariot 1b dans le premier chariot 1a de sorte à autoriser l'emboîtement au moins partiellement de la structure de suspension 30b du deuxième chariot 1b dans la structure de suspension 30a du premier chariot 1a. De cette façon, le deuxième chariot 1b peut être emboîté au moins partiellement dans le premier chariot 1a. L'emboîtement est alors avantageusement arrêté lorsque la structure de suspension 30 du premier chariot 1a et la structure de suspension 30 du deuxième chariot 1b se frottent suffisamment et freinent ainsi l'emboîtement jusqu'à l'arrêt du deuxième chariot 1b. Comme indiqué ci-dessus, on prévoit que le chariot soit configuré de sorte à ce que le contenant situé le plus en arrière du chariot puisse coulisser le long du rail 306 lorsqu'un effort lui est appliqué, typiquement lorsque le chariot est emboîté dans un autre chariot. Cela permet de réduire encore le volume occupé par plusieurs chariots emboîtés.

Ledit cadre 100 peut aussi être présent dans le mode de réalisation illustré aux figures 39 à 55. Ainsi tel que décrit précédemment, la présence du cadre 100 permet à l'utilisateur ou une autre personne de s'appuyer sur ledit cadre 100 sans venir perturber la mesure réalisée par le dispositif de mesure 50. En figures 48 et 49 par exemple, il apparaît clairement que la structure de suspension 30 est distincte du cadre 100. De manière particulièrement avantageuse, le cadre 100 présente une forme qui masque la structure de suspension 30, typiquement le rail 306 pour l'utilisateur. Ce dernier ne peut donc pas ou ne peut pas facilement accéder à la structure de suspension, typiquement le rail 306, par exemple pour s'y appuyer. L'utilisateur au contraire entrera au contact et s'appuiera sur le cadre 100.

Dans cet exemple, la structure de suspension 30 forme un rail 306 qui s'étend sous un profilé du cadre 100. De préférence, ce profilé de cadre 100 forme un « L » ou un « U » inversé ou incliné et ouvert vers l'intérieur chariot. De manière préférée, et comme cela est illustré sur les figures, ce profilé le cadre 100 forme un tube dont la section définit un contour 101 fermé à l'exception d'une ouverture 102, qui s'étend longitudinalement et qui est configurée pour permettre une liaison mécanique entre les contenants et le rail de guidage. Typiquement, cette ouverture 102 forme une fente qui s'étend sur tout ou une partie de la longueur du profilé de cadre 100 et qui permet le passage d'au moins un rebord 41, 42 pour chaque contenant. Le contour 101 et l'ouverture 102 sont référencées en figure 50. Le rail 306 de la structure de suspension 30 est logé à l'intérieur du profilé de cadre 100.

Cela permet de délimiter à l'intérieur du profilé un volume non accessible ou peu accessible depuis l'extérieur du chariot. De préférence, le rail 306 de la structure de suspension 30 s'étend le long de ce volume. Ce rail 306 est ainsi protégé. Tout au moins, un utilisateur ne peut pas prendre appui sur cette structure de suspension 30. Cela permet d'éviter de fausser la mesure du poids des articles contenus dans le chariot. Cela permet donc de résoudre la problématique consistant à améliorer la fiabilité et la précision de la mesure du poids des articles contenus dans le chariot. Par ailleurs, cela permet d'améliorer la sécurité du chariot en évitant qu'un utilisateur interfère avec les coulisseaux sur le rail 306, par exemple en s'y coinçant les doigts. Ainsi toutes les modes de réalisations décrivent une structure de suspension configurée pour autoriser l'emboîtement du chariot dans un autre chariot ayant une structure de suspension identique.

Dans les exemples décrits ci-dessus en référence aux figures 39 à 63 les contenants sont délimités par des parois pleines, par exemple en métal ou en plastique. Selon un autre mode de réalisation, l'une seulement, ou plusieurs, voire toutes les parois sont formées d'une structure en grillage ou d'une structure ajourée comme illustré en figure 2.

Dans tous les exemples illustrés ci-dessus, les contenants ou contenants sont rigides. Ils ne sont pas déformables manuellement. Selon un autre exemple de réalisation, non illustré, la pluralité de contenants ou de contenants est remplacée par un unique contenant ou contenant déformable. Selon un exemple de réalisation, ce contenant en déformable est formé en partie au moins en tissu, et de préférence entièrement issue. Il est configuré pour être comprimé afin de pour passer sélectivement d'une configuration déployée à une configuration rétractée. Dans la configuration déployée il offre un premier volume d'accueil d'articles déposés par l'utilisateur. Dans la configuration rétractée il ne permet pas d'accueillir des articles ou présente un volume d'accueil plus faible que dans la configuration déployée.

Le passage de la configuration déployée à la configuration rétractée s'effectue en emboîtant le chariot dans un autre chariot. Pour cela, on peut prévoir qu'une partie avant du contenant en tissu entre au contact de l'autre chariot et viennent déformer le contenant. À cet effet, on peut prévoir que le contenant en tissu comporte des zones privilégiées de déformation. Ces zones privilégiées de déformation peuvent par exemple comprendre des zones préformées et configuré pour faciliter la déformation. Il peut par exemple s'agir de soufflets en tissu ou en élastomère, en caoutchouc ou par exemple.

Le passage de la configuration rétractée à la configuration déployée s'effectue de préférence par gravité. Pour cela, le contenant déformable peut présenter des rebords munis d'anneaux ou d'oeillets qui coopèrent avec un élément de guidage tel qu'un rail, une tige ou un câble de guidage, comme par exemple le rail 306 illustré en figure 50. De préférence, cet élément de guidage est incliné par rapport à l'horizontale en se rapprochant du sol vers l'avant du chariot. Ainsi, comme pour le mode de réalisation illustré en figures 39 à 55, la partie avant du contenant déformable se déplace par gravité vers l'avant du chariot. Pour cela, on peut prévoir que la partie avant du contenant déformable soit suffisamment lestée.

Selon un mode de réalisation particulièrement avantageux, un chariot présentant un même cadre 100 et une même structure de suspension 30 peut accueillir différents types de contenants. Ainsi, on se peut sélectivement monter sur un même chariot un ou des ts contenants rigides fixes, un ou des contenants rigides coulissants et télescopiques, un ou des contenants déformables.

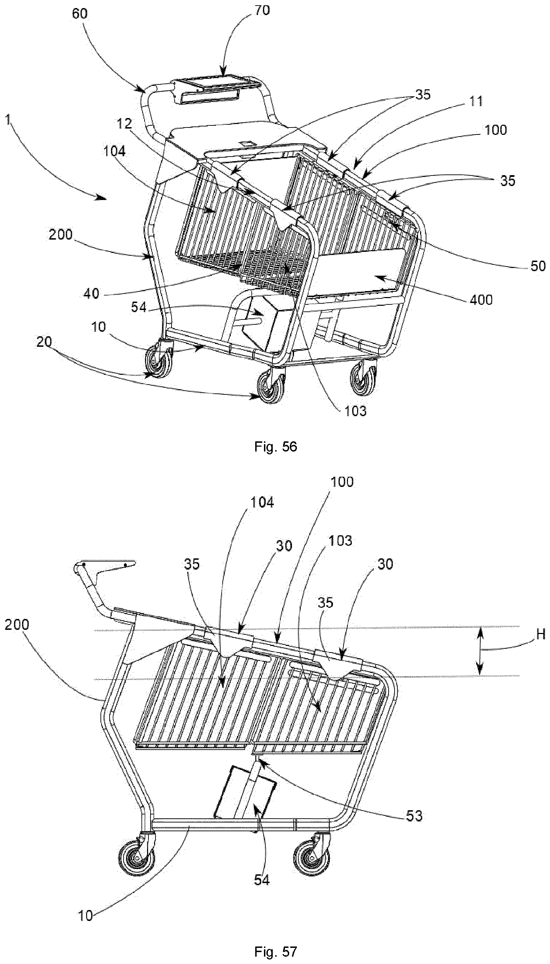

Nous allons à présent décrire un autre mode de réalisation préféré de la présente invention au travers des figures 56 à 63.

Selon le mode de réalisation illustré en figure 56, le chariot 1 présente avantageusement un contenant 40 et de préférence un unique contenant 40. Ce contenant 40 comprend une partie avant 103 et une partie arrière 104. La partie arrière 104 correspond à la partie du contenant 40 la plus proche du dispositif de préhension 60, la partie avant 103 se situant à l'opposé de la partie arrière 104. Tel qu'illustré par la suite, le châssis 10 comprend également une partie avant 105 et une partie arrière 106. La partie arrière 106 correspond à la partie du châssis la plus proche du dispositif de préhension 60, la partie avant 105 se situant à l'opposé de la partie arrière 106.

Selon ce mode de réalisation, la partie avant 103 du contenant 40 présente une dimension en largeur 103a supérieure à la dimension en largeur 104a de la partie arrière 104 du contenant 40.

Selon ce mode de réalisation, la partie avant 105 du châssis 10 présente une dimension en largeur 105a inférieure à la dimension en largeur 106a de la partie arrière 106 du châssis 10.

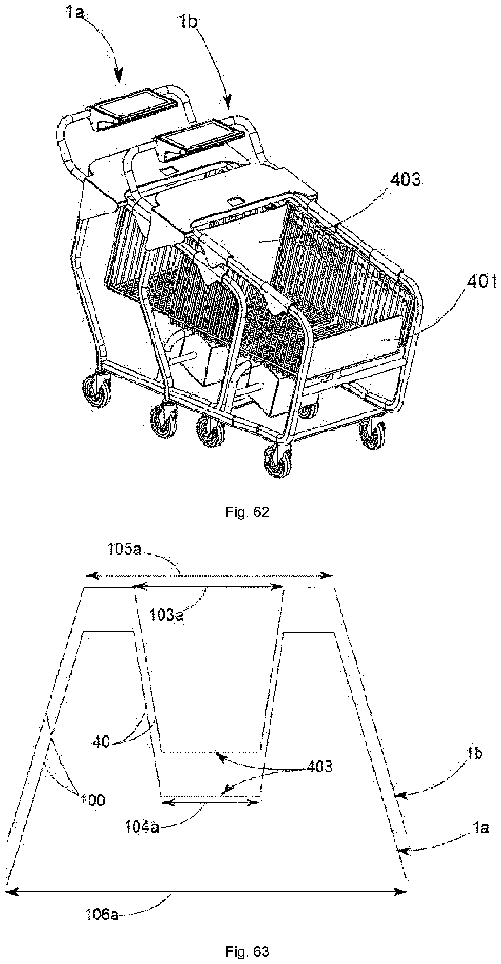

En effet, selon un mode de réalisation préféré et tel qu'illustré en figures 62 et 63, le chariot 1 est configuré pour recevoir en partie au moins un autre chariot 1b en configuration de stockage et avantageusement pour être reçu en partie au moins par l'autre chariot 1b.

En effet, selon ce mode de réalisation, la partie avant 103 du contenant 40 est plus large afin de pouvoir venir de part et d'autre de la partie arrière 104 du contenant 40 d'un autre chariot 1b en configuration de stockage. Et de préférence, la partie avant 105 du châssis 10 est moins large afin de pouvoir venir dans la partie arrière 106 du châssis 10 d'un autre chariot 1b en configuration de stockage. Ainsi, c'est le contenant pendant contenant 40 du chariot avant 1b qui pénètre à l'intérieur du contenant 40 du chariot arrière 1a. Comme on le verra par la suite, pour ces mêmes chariots arrière 1a et avant 1b, lors de leur emboîtement respectif, c'est-à-dire en configuration de stockage, c'est le châssis 10 du chariot arrière 1a qui pénètre à l'intérieur du châssis 10 du chariot avant 1b.

Selon un mode de relation, pour ces chariots arrière 1a et avant 1b, lors de leur emboîtement respectif, c'est le cadre 100 du chariot arrière 1a qui pénètre à l'intérieur du cadre 100 du chariot avant 1b.

De manière avantageuse, le chariot 1a de la présente invention est configuré pour présenter une partie venant s'emboîter dans une partie d'un autre chariot 1b et pour présenter une autre partie venant entourer une autre partie d'un autre chariot 1b.

Selon un mode de réalisation, la structure de suspension 30 comprend au moins une barre de suspension 34, au moins un dispositif de mesure 50 comprenant au moins un capteur de force 51, et au moins une accroche 56 du dispositif de mesure 50 au cadre 100, et de préférence le cadre 100.

Selon un mode de réalisation, la structure de suspension 30 présente une dimension en hauteur H qui diminue le long d'une direction correspondant à la direction d'emboîtement dudit chariot 1 dans un autre chariot 1b de sorte à autoriser l'emboîtement au moins partiellement du chariot 1 dans un autre chariot 1b ayant une structure de suspension 30 identique à la structure de suspension dudit chariot 30.

Selon un mode de réalisation, le cadre 100 présente une dimension en hauteur qui diminue le long d'une direction correspondant à la direction d'emboîtement dudit chariot 1 dans un autre chariot 1b de sorte à autoriser l'emboîtement au moins partiellement du chariot 1 dans un autre chariot 1b ayant une structure de suspension identique à la structure de suspension dudit chariot 1.

Selon un mode de réalisation préféré, le dispositif de mesure 50 est inséré dans le cadre 100, de préférence est disposé entre deux parties du cadre 100. Avantageusement, le cadre 100 peut comprendre une pluralité de parties 101, 102. De préférence, un ou plusieurs dispositifs de mesure 50 peuvent être disposés entre différentes parties de la pluralité de parties du cadre 100.

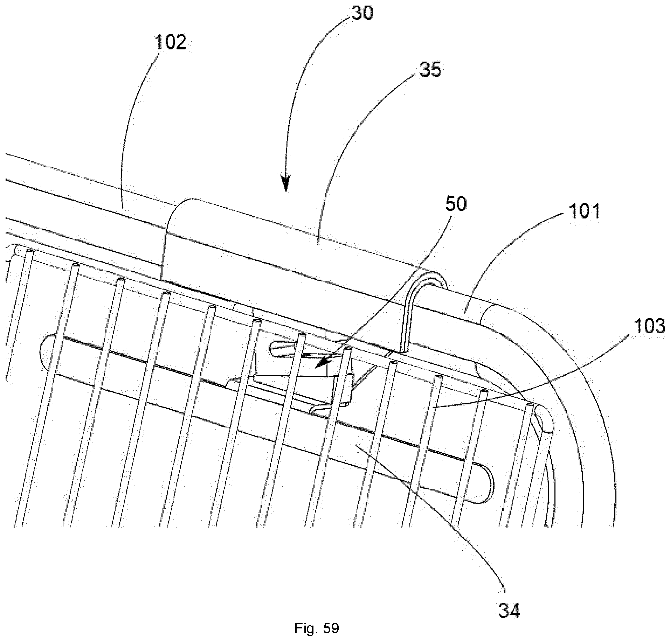

Selon un mode de réalisation préféré et tel que représenté sur les figures 59 à 61, à titre d'exemple non limitatif, le cadre 100 comprend une première partie 101 et une deuxième partie 102. De manière astucieuse, le dispositif de mesure 50 est situé entre la première partie 101 et la deuxième partie 102 de sorte à d'une part solidariser les deux parties entre elle, et d'autre part à suspendre le capteur de force 51 de sorte à ce que tout appui sur le cadre 100 ne puisse venir gêner une mesure de poids.

Sur la figure 56 on remarque que la partie avant 103 du contenant 40 comprend avantageusement un clapet 400 disposé à l'avant du chariot 1. Sur cet exemple non limitatif, le clapet 400 forme une paroi du contenant 40. Ce clapet 400 est configuré pour s'abaisser lorsque le chariot 1 vient s'emboîter avec un autre chariot 1b, de préférence lorsque la partie avant 103 du contenant 40 reçoit la partie arrière 104 du contenant 40 d'un autre chariot 1b. Selon ce mode de réalisation, le clapet 400 présente sélectivement deux configurations. Selon un mode de réalisation non limitatif, une première configuration correspond à une configuration dite levée dans laquelle le clapet 400 s'étend principalement verticalement, la deuxième configuration correspondant à une configuration dite couchée dans laquelle le clapet 400 s'étend principalement horizontalement. De manière avantageuse, le clapet 400 comprend au moins un élément charnière 402. Cet élément charnière 402 comprend un axe de rotation, de préférence horizontal. Cet élément charnière 402 comprend de manière avantageuse au moins un élément de rappel configuré pour maintenir le clapet en configuration levée lorsque le chariot 1 n'est pas emboîté avec un autre chariot 1b, de préférence n'est pas emboîté autour d'un autre du contenant chariot 1b.

Toujours au travers des figures 56 à 63, On notera que le cadre 100 comprend des caches 35 disposés au-dessus des dispositifs de mesure 50. Ces caches 35 prennent appui sur le cadre 100 de sorte que lorsqu'une force présentant une composante verticale s'applique sur le cadre 100 ou sur le cache 35, cette force soit transmise à la structure porteuse 200 puis au châssis 10 de sorte que cette force ne puisse perturber le ou les dispositifs de mesure 50, de préférence ne puisse perturber la ou les mesures de poids effectuées par le ou les dispositifs de mesure 50.

Ainsi, selon l'exemple illustré en figures 56 à 63, le chariot 1 comprend au moins 4 dispositifs de mesure 50. Chaque bras du chariot 11, 12 porte de préférence deux dispositifs de mesure 50. Ces dispositifs de mesure 50 seront décrits plus précisément par la suite.

Sur la figure 56, le chariot 1 comprend un dispositif de préhension 60 et un dispositif d'affichage 70 tel que décrit précédemment.

Le chariot 1 comprend ainsi au moins un contenant 40 suspendu au cadre 100 au travers de quatre dispositifs de mesure 50. Selon un mode de réalisation, tel que mentionné précédemment, ce contenant 40 comprend deux parties, une partie avant 103 et une partie arrière 104. La partie avant 103 comprend une dimension en largeur 103a supérieure à la dimension en largeur 104a de la partie arrière 104. La partie avant 103 du contenant 40 comprend le clapet 400 décrit précédemment. La partie arrière 104 du contenant 40 comprend au moins une paroi arrière 403. La partie avant 103 du contenant 40 est suspendue au cadre 100 au travers de deux dispositifs de mesure 50. En effet, la partie avant 103 du contenant 40 est suspendue au premier bras 11 du chariot 1 par un dispositif de mesure 50 au travers d'une barre de suspension 34, et au deuxième bras 12 du chariot 1 par un autre dispositif de mesure 50 au travers d'une autre barre de suspension 34. Il en est de même pour la partie arrière 104 du contenant 40.

On notera enfin sur la figure 56 par exemple, la présence d'un bloc comprenant une batterie électrique 54 configurée pour alimenter électriquement l'ensemble des éléments électriques du chariot 1. Ce bloc est avantageusement disposé sous le contenant 40 de sorte à ce que le centre de gravité soit le plus bas possible.

La figure 57 est une vue de profil du chariot 1 illustré en figure 56. On retrouve les éléments précédemment décrits sur cette figure. On note en particulier le bloc 54 comprenant un doigt de coaxialité 53. Ce doigt de coaxialité est configuré pour venir buter contre une butée portée par le contenant 40. Ainsi, la butée limite le déplacement et donc le balancement du contenant 40. De préférence, la butée est formée par une ouverture dans laquelle est inséré le doigt de coaxialité 53. Le doigt de coaxialité 53 est configuré pour venir en appui sur le bord de l'ouverture portée par le contenant 40 suspendu de sorte à limiter le balancement dudit contenant 40 suspendu.

Selon un mode de réalisation, le doigt de coaxialité 53 peut être remplacé ou comprendre un dispositif de mesure additionnel 53. Ce dispositif de mesure additionnel 53 est destiné à supporter en partie au moins le contenant 40 et son contenu, et de préférence destiné à mesurer le poids du contenant 40 et de son contenu.

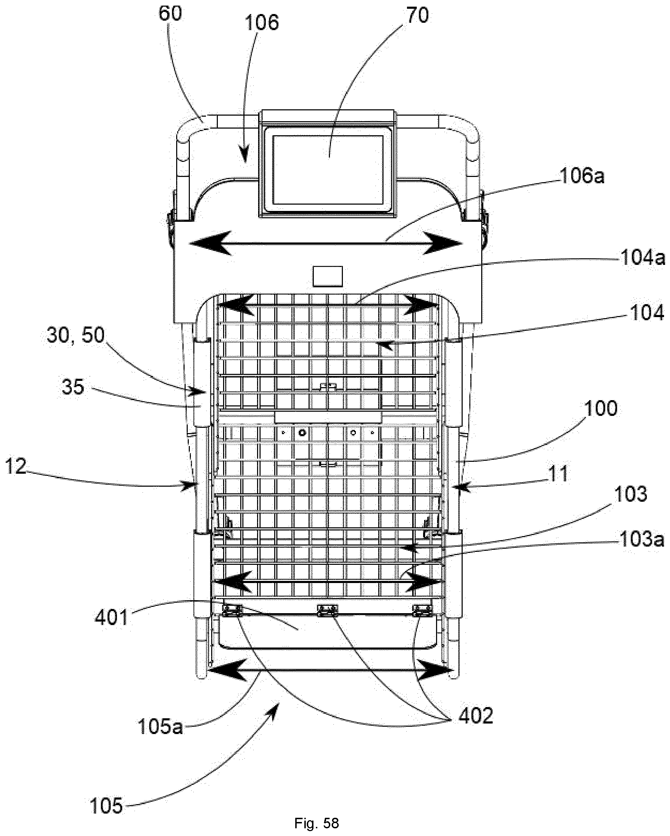

La figure 58 est une vue du dessus d'un chariot 1 tel qu'illustré en figure 56 et 57. Sur cette figure on remarque ainsi, comme indiqué précédemment, que la partie avant 105 du chariot 1 est moins large que la partie arrière 106 du chariot 1 de sorte à permettre l'emboîtement dudit chariot 1 dans une partie au moins d'un autre chariot 1b.

De même, sur cette figure, on remarque que la partie avant 103 du contenant 40 est plus large que la partie arrière 104 du contenant 40 de sorte à permettre l'emboîtement dudit chariot 1 autour d'une partie au moins d'un autre chariot 1b, de préférence à permettre l'emboîtement de la partie avant 103 du contenant 40 du chariot 1 autour de la partie arrière 104 du contenant 40 de l'autre chariot 1b.

La figure 59 est un agrandissement d'un dispositif de mesure 50 disposé sous un cache 35 et entre une première partie 101 du cadre 100 et une deuxième partie 102. Le dispositif de mesure 50 est relié à une partie au moins du contenant 40 par une barre de suspension 34. L'utilisation d'un cache 35 est astucieuse, car celui-ci ne repose que sur le cadre 100, et n'est pas en contact mécanique direct avec le dispositif de mesure 50, si bien que toute force appliquée au cache 35 et ayant une composante verticale n'est ni transmise au dispositif de mesure 50, ni au contenant 40, mais directement au cadre 100, puis à la structure porteuse 200 et enfin au châssis 10.

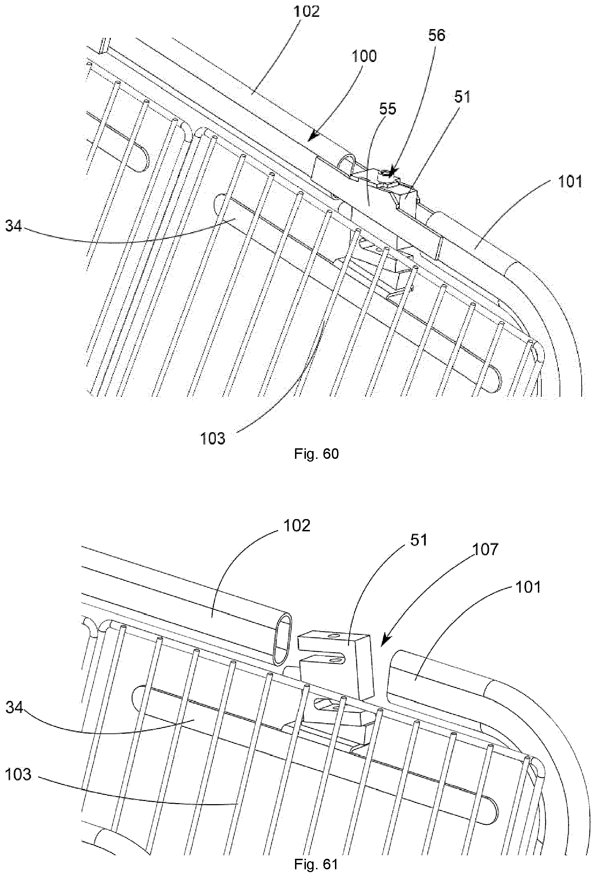

La figure 60 illustre le même agrandissement que celui de la figure 59 avec le cache 35 retiré. On découvre dès lors le dispositif de mesure 50 comprenant un capteur de force 51. Ce capteur de force 51 est solidaire de la première partie 101 du cadre 100 et de la deuxième partie 102 du cadre 100. Cette solidarisation est assurée par des barres de solidarisation 55 et par une accroche 56 du capteur de force 51. Cette accroche 56 vient solidariser le capteur de force 51 aux barres de solidarisation 55. Cette solidarisation est astucieuse, car elle évite que toute force appliquée au cadre 100 ne puisse venir perturber la mesure du poids du contenant 40 et de son contenu. De plus, l'introduction du dispositif de mesure 50 dans la structure même du cadre 100 permet un gain de place conséquent et une meilleure ergonomie. Ce capteur de force 51 est également solidaire d'une partie au moins du contenant 40 au travers de préférence d'une barre de suspension 34.

Selon un mode de réalisation, le cadre 100 comprend les barres de solidarisation 55
La figure 61 est une vue faisant suite à la figure 60, dans laquelle le capteur de force 51 est désolidarisé du cadre 100 dans une optique de clarté afin d'illustrer le montage mécanique du dispositif de mesure 50 selon un mode de réalisation astucieux. On note ainsi que le contenant 40 est suspendu au dispositif de mesure 50, en particulier au capteur de force 51, par l'intermédiaire de la barre de suspension 34. Le contenant 40 est ainsi totalement décorrélé des forces pouvant ou non s'appliquer sur le cadre 100 du chariot 1.

Avantageusement, le cadre 100 comprend au moins une ouverture 107, qui peut prendre la forme d'une ouverture traversante, d'un évidement ou d'une gorge. Le dispositif de mesure 50 est disposé, de préférence entièrement logée, à l'intérieur de l'ouverture 107 du cadre 100.

La figure 62 illustre un chariot 1a emboîté autour d'un autre chariot 1b. Tel que présenté précédemment, le chariot 1a comprend un contenant 40 ayant une partie avant 103 plus large que sa partie arrière 104 de sorte à coopérer avec la partie arrière 104 d'un autre chariot 1b identique au chariot 1a et ainsi de sorte à venir s'emboîter autour de la partie arrière 103 du contenant 40 de l'autre chariot 1b.

En particulier, et de manière astucieuse, la partie arrière 104 de contenant 40 de l'autre chariot 1b vient dès lors s'imbriquer dans la partie avant 103 du contenant 40 du chariot 1a. Lors de l'emboîtement des deux chariots 1a et 1b, le clapet 400 du chariot 1a est permuté dans sa configuration couchée par la partie arrière 104 du contenant 40 de l'autre chariot 1b. On notera également que la partie arrière 104 du contenant d'un chariot 1 comprend une paroi arrière 403. La figure 63 illustre schématiquement une vue de dessus de l'emboîtement du chariot 1a avec l'autre chariot 1b. On remarque que la partie avant 103 du contenant 40 du chariot 1 vient entourer une partie au moins de la partie arrière 104 du contenant 40 de l'autre chariot 1b, et que la partie avant 105 du châssis 10 du chariot 1a vient s'emboîter dans une partie au moins de la partie arrière 106 du châssis de l'autre chariot 1b.

La présente invention permet ainsi d'emboîter simplement, efficacement et de manière fiable deux chariots équipés chacun d'au moins un dispositif de mesure du poids d'un contenant et de son contenu.

Dans tous les modes de réalisation précédents, les termes contenants, bacs, caissons ou réceptacles sont considérés comme équivalents et peuvent être interchangés. L'invention n'est pas limitée aux modes de réalisation décrits dans les exemples non limitatifs ci-dessus, mais s'étend à tous les modes de réalisation entrant dans la portée des revendications.

### LISTE DES REFERENCES

1 Chariot
1a Premier chariot
1b Deuxième chariot
1c Troisième chariot
3 Direction d'avancée du chariot
4 Directions de coulissement
10 Châssis
10a Châssis du premier chariot
10b Châssis du deuxième chariot
10c Châssis du troisième chariot
11 Premier bras
12 Deuxième bras
13 Portion horizontale
14 Portion verticale
15 Portion télescopique de solidarisation
15a Portion télescopique de solidarisation du premier chariot
15b Portion télescopique de solidarisation du deuxième chariot
16 Portion télescopique
16a Portion télescopique du premier chariot
16b Portion télescopique du deuxième chariot
17 Charnière
18 Vérin
19 Butée
20 Organe d'appui
30 Structure de suspension
30a Structure de suspension du premier chariot
30b Structure de suspension du deuxième chariot
31 Zones d'accueil
32 Face supérieure
33 Face latérale
34 Barre de suspension
35 Cache
40 Bac suspendu, contenant
41 Premier rebord
42 Deuxième rebord
43 Dispositif de mesure additionnel
44 Ouverture
50 Dispositif de mesure
51 Capteur de force
52 Doigt de coaxialité
53 Capteur de force additionnel
54 Batterie électrique
55 Barre de solidarisation
56 Accroche du capteur de force
60 Dispositif de préhension
70 Dispositif d'affichage
71 Lecteur optique
80 Réceptacle
80a Premier réceptacle
80b Deuxième réceptacle
81 Première paroi latérale
81a Première paroi latérale du premier réceptacle
81b Première paroi latérale du deuxième réceptacle
82 Deuxième paroi latérale
82a Deuxième paroi latérale du réceptacle du premier chariot
82b Deuxième paroi latérale du réceptacle du deuxième chariot
83 Axe de rotation
90 Contenant
91 Première anse
92 Deuxième anse
100 Cadre
101 Première partie du cadre
102 Deuxième partie du cadre
103 Partie avant du contenant
103a Dimension en largeur de la partie avant du contenant
104 Partie arrière du contenant
104a Dimension en largeur de la partie arrière du contenant
105 Partie avant du châssis
105a Dimension en largeur de la partie avant du châssis
106 Partie arrière du châssis

## Revendications

1. Chariot (1), par exemple pour supermarché, comprenant :
- au moins un châssis (10) supporté par au moins trois organes d'appui configurés pour supporter de manière isostatique le chariot (1) sur un sol, au moins deux desdits au moins trois organes comprenant chacun au moins un dispositif roulant (20),
- une structure porteuse (200) supportée par le châssis (10),
- une structure de suspension (30) supportée par la structure porteuse (200) configurée pour suspendre au moins un contenant (40, 90, 80, 300) dans lequel au moins un produit est destiné à être placé, le chariot (1) étant configuré de sorte à ce que l'au moins un contenant (40, 90, 80, 300) soit entièrement suspendu à la structure de suspension (30),
- un dispositif de préhension (60) destiné à être appréhendé par l'utilisateur pour déplacer ledit chariot (1),
**caractérisé en ce que**,
- le chariot (1) comprend au moins un dispositif de mesure (50) porté en partie au moins par la structure de suspension (30) et étant destiné à mesurer au moins un paramètre relatif au poids de l'au moins un contenant (40, 90, 80, 300) lorsque le contenant est suspendu à la structure de suspension (30),
- la structure de suspension (30) dudit chariot (1) est conformée pour coopérer avec la structure de suspension (30) d'un autre chariot (1) de sorte à permettre l'emboîtement au moins partiel dudit chariot (1) dans ledit autre chariot (1) par coopération de la structure de suspension (30) dudit chariot (1) avec la structure de suspension (30) dudit autre chariot (1).

2. Chariot (1) selon la revendication précédente, dans lequel le dispositif de mesure (50) est porté entièrement par la structure de suspension (30).

3. Chariot (1) selon l'une quelconque des revendications précédentes dans lequel le dispositif de mesure (50) comprend au moins un capteur de force (51) destiné à mesurer le paramètre relatif au poids de l'au moins un contenant (40, 90, 80, 300) et de l'au moins un produit qu'il contient, de préférence ledit capteur de force (51) comprenant une jauge de déformation.

4. Chariot (1) selon l'une quelconque des revendications précédentes, configuré de sorte à ce que lorsqu'une force appliquée par un utilisateur sur le dispositif de préhension (60) présente une composante verticale, cette composante verticale est transmise depuis le dispositif de préhension (60) jusqu'au châssis (10) puis au sol.

5. Chariot (1) selon l'une quelconque des revendications précédentes, comprenant au moins un cadre (100) porté par le châssis (10), le cadre (100) étant configuré pour que lorsqu'une force, présentant une composante verticale, est appliquée par un utilisateur sur le cadre (100), cette composante verticale soit transmise depuis le cadre (100) jusqu'au châssis (10) puis au sol sans être transmise à la structure de suspension (30).

6. Chariot (1) selon la revendication précédentes dans lequel le dispositif de mesure (50) est suspendu au cadre (100).

7. Chariot selon l'une quelconque des revendications précédentes comprenant au moins un contenant (40, 90, 80, 300) dans lequel au moins un produit est destiné à être placé.

8. Chariot (1) selon la revendication précédente, dans lequel l'au moins un contenant (40, 300a, 300b) est rigide, c'est-à-dire qu'il n'est pas déformable manuellement.

9. Chariot (1) selon l'une quelconque des deux revendications précédentes dans lequel le contenant (40, 90, 80, 300) est solidaire du chariot (1), de préférence uniquement au travers d'un ou de plusieurs dispositifs de mesure (50).

10. Chariot selon l'une quelconque des trois revendications précédentes dans lequel la structure de suspension (30), l'au moins un contenant (40, 80, 300) et le châssis (10) dudit chariot (1) sont conformés pour coopérer avec la structure de suspension (30), l'au moins un contenant (40, 80, 300) et le châssis (10) d'un autre chariot (1) de sorte à permettre l'emboîtement au moins partiel d'une partie au moins dudit chariot (1) à l'intérieur d'une partie au moins dudit autre chariot (1) par coopération de la structure de suspension (30), de l'au moins un contenant (40, 80, 300) et du châssis (10) dudit chariot (1) avec la structure de suspension (30), l'au moins un contenant (40, 80, 300) et le châssis (10) dudit autre chariot (1).

11. Chariot (1) selon l'une quelconque des quatre revendications précédentes dans lequel la structure de suspension (30), l'au moins un contenant (40, 80, 300) et le châssis (10) dudit chariot (1) étant conformés pour coopérer avec la structure de suspension (30), l'au moins un contenant (40, 80, 300) et le châssis (10) d'un autre chariot (1) de sorte à permettre l'emboîtement au moins partiel d'une partie au moins dudit autre chariot (1) à l'intérieur d'une partie au moins dudit chariot (1) par coopération de la structure de suspension (30), de l'au moins un contenant (40, 80, 300) et du châssis (10) dudit autre chariot (1) avec la structure de suspension (30), l'au moins un contenant (40, 80, 300) et le châssis (10) dudit chariot (1).
(40, 80, 300).

12. Chariot (1) selon l'une quelconque des revendications précédentes dans lequel le châssis (10) présente une partie avant (105) et une partie arrière (106), la partie avant (105) présentant une première dimension en largeur (105a), la partie arrière (106) présentant une deuxième dimension en largeur (106a), la première dimension en largeur (105a) étant inférieure à la deuxième dimension en largeur (106a).

13. Chariot (1) selon la revendication précédente dans lequel la partie avant (105) du châssis (10) est configurée pour venir s'emboîter à l'intérieur d'une partie au moins de la partie arrière (106) du châssis (10) d'un autre chariot (1) en configuration de stockage.

14. Chariot selon l'une quelconque des revendications précédentes dans lequel la structure de suspension (30) présente une dimension en hauteur H qui diminue le long d'une direction correspondant à la direction d'emboîtement dudit chariot (1) dans un autre chariot (1) de sorte à autoriser l'emboîtement au moins partiellement du chariot (1) à l'intérieur d'un autre chariot (1).

15. Chariot selon l'une quelconque des revendications précédentes dans lequel le cadre (100) présente une dimension en hauteur qui diminue le long d'une direction correspondant à la direction d'emboîtement dudit chariot (1) dans un autre chariot (1) de sorte à autoriser l'emboîtement au moins partiellement du chariot (1) à l'intérieur d'un autre chariot (1).

## Patentansprüche

1. Wagen (1), zum Beispiel für einen Supermarkt, umfassend:
- mindestens ein Fahrgestell (10), das von mindestens drei Auflageorganen gestützt wird, die dafür konfiguriert sind, den Wagen (1) isostatisch auf einem Boden abzustützen, wobei mindestens zwei der mindestens drei Organe jeweils mindestens eine Rollvorrichtung (20) umfassen,
- eine Tragstruktur (200), die vom Fahrgestell (10) gestützt wird,
- eine von der Tragstruktur (200) gestützte Aufhängungsstruktur (30), die dafür konfiguriert ist, mindestens einen Behälter (40, 90, 80, 300), in dem mindestens ein Produkt platziert werden soll, aufzuhängen, wobei der Wagen (1) so konfiguriert ist, dass der mindestens eine Behälter (40, 90, 80, 300) vollständig an der Aufhängungsstruktur (30) aufgehängt ist,
- eine Greifvorrichtung (60), die dazu bestimmt ist, vom Benutzer gegriffen zu werden, um den Wagen (1) zu bewegen, **dadurch gekennzeichnet, dass**
- der Wagen (1) mindestens eine Messvorrichtung (50) umfasst, die mindestens zum Teil von der Aufhängungsstruktur (30) getragen wird und dazu bestimmt ist, mindestens einen Parameter, der sich auf das Gewicht des mindestens einen Behälters (40, 90, 80, 300) bezieht, zu messen, wenn der Behälter an der Aufhängungsstruktur (30) aufgehängt ist,
- die Aufhängungsstruktur (30) des Wagens (1) dafür ausgestaltet ist, mit der Aufhängungsstruktur (30) eines anderen Wagens (1) so zusammenzuwirken, dass sie das mindestens teilweise Einschieben des Wagens (1) in den anderen Wagen (1) durch Zusammenwirken der Aufhängungsstruktur (30) des Wagens (1) mit der Aufhängungsstruktur (30) des anderen Wagens (1) zu ermöglicht.

2. Wagen (1) nach dem vorstehenden Anspruch, wobei die Messvorrichtung (50) vollständig von der Aufhängungsstruktur (30) getragen wird.

3. Wagen (1) nach einem der vorstehenden Ansprüche, wobei die Messvorrichtung (50) mindestens einen Kraftsensor (51) umfasst, der dazu bestimmt ist, den Parameter, der sich auf das Gewicht des mindestens einen Behälters (40, 90, 80, 300) und des mindestens einen Produkts, das dieser enthält, bezieht, zu messen, wobei der Kraftsensor (51) vorzugsweise einen Dehnungsmessstreifen umfasst.

4. Wagen (1) nach einem der vorstehenden Ansprüche, der so konfiguriert ist, dass, wenn eine Kraft, die von einem Benutzer auf die Greifvorrichtung (60) ausgeübt wird, eine vertikale Komponente aufweist, diese vertikale Komponente von der Greifvorrichtung (60) auf das Fahrgestell (10) und dann auf den Boden übertragen wird.

5. Wagen (1) nach einem der vorstehenden Ansprüche, der mindestens einen Rahmen (100) umfasst, der vom Fahrgestell (10) getragen wird, wobei der Rahmen (100) dafür konfiguriert ist, dass, wenn eine Kraft, die eine vertikale Komponente aufweist, von einem Benutzer auf den Rahmen (100) ausgeübt wird, diese vertikale Komponente vom Rahmen (100) auf das Fahrgestell (10) und dann auf den Boden übertragen wird, ohne auf die Aufhängungsstruktur (30) übertragen zu werden.

6. Wagen (1) nach dem vorstehenden Anspruch, wobei die Messvorrichtung (50) am Rahmen (100) aufgehängt ist.

7. Wagen nach einem der vorstehenden Ansprüche, der mindestens einen Behälter (40, 90, 80, 300) umfasst, in dem mindestens ein Produkt platziert werden soll.

8. Wagen (1) nach dem vorstehenden Anspruch, wobei der mindestens eine Behälter (40, 300a, 300b) starr ist, das heißt nicht von Hand verformt werden kann.

9. Wagen (1) nach einem der zwei vorstehenden Ansprüche, wobei der Behälter (40, 90, 80, 300) fest mit dem Wagen (1) verbunden ist, vorzugsweise nur über eine oder mehrere Messvorrichtungen (50).

10. Wagen nach einem der drei vorstehenden Ansprüche, wobei die Aufhängungsstruktur (30), der mindestens eine Behälter (40, 80, 300) und das Fahrgestell (10) des Wagens (1) dafür ausgestaltet sind, so mit der Aufhängungsstruktur (30), dem mindestens einen Behälter (40, 80, 300) und dem Fahrgestell (10) eines anderen Wagens (1) zusammenzuwirken, dass sie das mindestens teilweise Einschieben mindestens eines Teils des Wagens (1) in das Innere mindestens eines Teils des anderen Wagens (1) durch Zusammenwirken der Aufhängungsstruktur (30), des mindestens einen Behälters (40, 80, 300) und des Fahrgestells (10) des Wagens (1) mit der Aufhängungsstruktur (30), dem mindestens einen Behälter (40, 80, 300) und dem Fahrgestell (10) des anderen Wagens (1) ermöglichen.

11. Wagen (1) nach einem der vier vorstehenden Ansprüche, wobei die Aufhängungsstruktur (30), der mindestens eine Behälter (40, 80, 300) und das Fahrgestell (10) des Wagens (1) dafür ausgestaltet sind, so mit der Aufhängungsstruktur (30), dem mindestens einen Behälter (40, 80, 300) und dem Fahrgestell (10) eines anderen Wagens (1) zusammenzuwirken, dass sie das mindestens teilweise Einschieben mindestens eines Teils des anderen Wagens (1) in das Innere mindestens eines Teils des Wagens (1) durch Zusammenwirken der Aufhängungsstruktur (30), des mindestens einen Behälters (40, 80, 300) und des Fahrgestells (10) des anderen Wagens (1) mit der Aufhängungsstruktur (30), dem mindestens einen Behälter (40, 80, 300) und dem Fahrgestell (10) des Wagens (1) ermöglichen.
(40, 80, 300).

12. Wagen (1) nach einem der vorstehenden Ansprüche, wobei das Fahrgestell (10) einen vorderen Teil (105) und einen hinteren Teil (106) aufweist, wobei der vordere Teil (105) eine erste Breitenabmessung (105a) aufweist, wobei der hintere Teil (106) eine zweite Breitenabmessung (106a) aufweist, wobei die erste Breitenabmessung (105a) kleiner ist als die zweite Breitenabmessung (106a).

13. Wagen (1) nach dem vorstehenden Anspruch, wobei der vordere Teil (105) des Fahrgestells (10) dafür konfiguriert ist, sich in Aufbewahrungskonfiguration in das Innere mindestens eines Teils des hinteren Teils (106) des Fahrgestells (10) eines anderen Wagens (1) einzuschieben.

14. Wagen nach einem der vorstehenden Ansprüche, wobei die Aufhängungsstruktur (30) eine Höhenabmessung H aufweist, die entlang einer Richtung, die der Einschubrichtung des Wagens (1) in einen anderen Wagen (1) entspricht, abnimmt, um das mindestens teilweise Einschieben des Wagens (1) in das Innere eines anderen Wagens (1) zu gestatten.

15. Wagen nach einem der vorstehenden Ansprüche, wobei der Rahmen (100) eine Höhenabmessung aufweist, die entlang einer Richtung, die der Einschubrichtung des Wagens (1) in einen anderen Wagen (1) entspricht, abnimmt, um das mindestens teilweise Einschieben des Wagens (1) in das Innere eines anderen Wagens (1) zu gestatten.

## Claims

1. A trolley (1), for example for a supermarket, comprising:
- at least one chassis (10) supported by at least three bearing members configured to isostatically support the trolley (1) on a ground, at least two of said at least three members each comprising at least one rolling device (20),
- a load-bearing structure (200) supported by the chassis (10),
- a suspension structure (30) supported by the load-bearing structure (200) configured to suspend at least one container (40, 90, 80, 300) in which at least one product is intended to be placed, the trolley (1) being configured so that the at least one container (40, 90, 80, 300) is completely suspended to the suspension structure (30),
- a gripping device (60) intended to be grasped by the user to move said trolley (1),
**characterised in that**,
- the trolley (1) comprises at least one measurement device (50) at least partially carried by the suspension structure (30) and being intended to measure at least one parameter relating to the weight of the at least one container (40, 90, 80, 300) when the container is suspended to the suspension structure (30),
- the suspension structure (30) of said trolley (1) is shaped so as to cooperate with the suspension structure (30) of another trolley (1) so as to enable the at least partial nesting of said trolley (1) in said other trolley (1) by cooperation between the suspension structure (30) of said trolley (1) with the suspension structure (30) of said other trolley (1).

2. The trolley (1) according to the preceding claim, wherein the measurement device (50) is completely carried by the suspension structure (30).

3. The trolley (1) according to any one of the preceding claims, wherein the measurement device (50) comprises at least one force sensor (51) intended to measure the parameter relating to the weight of the at least one container (40, 90, 80, 300) and of the at least one product contained therein, preferably said force sensor (51) comprising a strain gauge.

4. The trolley (1) according to any one of the preceding claims, configured so that when a force applied by a user on the gripping device (60) has a vertical component, this vertical component is transmitted from the gripping device (60) up to the chassis (10) and then to the ground.

5. The trolley (1) according to any one of the preceding claims, comprising at least one frame (100) carried by the chassis (10), the frame (100) being configured so that when a force, having a vertical component, is applied by a user on the frame (100), this vertical component is transmitted from the frame (100) up to the chassis (10) and then to the ground without being transmitted to the suspension structure (30).

6. The trolley (1) according to the preceding claim, wherein the measurement device (50) is suspended from the frame (100).

7. The trolley according to any one of the preceding claims, comprising at least one container (40, 90, 80, 300) in which at least one product is intended to be placed.

8. The trolley (1) according to the preceding claim, wherein the at least one container (40, 300a, 300b) is rigid, i.e. it cannot be manually deformed.

9. The trolley (1) according to any one of the preceding two claims, wherein the container (40, 90, 80, 300) is secured to the trolley (1), preferably only throughout one or more measurement device(s) (50).

10. The trolley according to any one of the preceding three claims, wherein the suspension structure (30), the at least one container (40, 80, 300) and the chassis (10) of said trolley (1) are shaped so as to cooperate with the suspension structure (30), the at least one container (40, 80, 300) and the chassis (10) of another trolley (1) so as to enable the at least partial nesting of at least part of said trolley (1) inside at least part of said other trolley (1) by cooperation of the suspension structure (30), of the at least one container (40, 80, 300) and of the chassis (10) of said trolley (1) with the suspension structure (30), the at least one container (40, 80, 300) and the chassis (10) of said other trolley (1).

11. The trolley (1) according to any one of the preceding four claims, wherein the suspension structure (30), the at least one container (40, 80, 300) and the chassis (10) of said trolley (1) being shaped so as to cooperate with the suspension structure (30), the at least one container (40, 80, 300) and the chassis (10) of another trolley (1) so as to enable the at least partial nesting of at least part of said other trolley (1) inside at least part of said trolley (1) by cooperation of the suspension structure (30), of the at least one container (40, 80, 300) and of the chassis (10) of said other trolley (1) with the suspension structure (30), the at least one container (40, 80, 300) and the chassis (10) of said trolley (1).
(40, 80, 300)

12. The trolley (1) according to any one of the preceding claims, wherein the chassis (10) has a front portion (105) and a rear portion (106), the front portion (105) having a first width dimension (105a), the rear portion (106) having a second width dimension (106a), the first width dimension (105a) being smaller than the second width dimension (106a).

13. The trolley (1) according to the preceding claim, wherein the front portion (105) of the chassis (10) is configured to be nested inside at least part of the rear portion (106) of the chassis (10) of another trolley (1) in the storage configuration.

14. The trolley according to any one of the preceding claims, wherein the suspension structure (30) has a height dimension H which decreases along a direction corresponding to the direction of nesting of said trolley (1) in another trolley (1) so as to enable the at least partial nesting of the trolley (1) inside another trolley (1) .

15. The trolley according to any one of the preceding claims, wherein the frame (100) has a height dimension which decreases along a direction corresponding to the direction of nesting of said trolley (1) in another trolley (1) so as to enable the at least partial nesting of the trolley (1) inside another trolley (1).
